(19) **Europäisches Patentamt / European Patent Office / Office européen des brevets**

(11) **EP 4 668 742 A1**

(12) **EUROPEAN PATENT APPLICATION**
published in accordance with Art. 153(4) EPC

(43) Date of publication:
24.12.2025 Bulletin 2025/52

(51) International Patent Classification (IPC):
*H04N 19/124* (2014.01)  *H04N 19/184* (2014.01)

(21) Application number: 24769817.8

(52) Cooperative Patent Classification (CPC):
H04N 19/124; H04N 19/152; H04N 19/184;
H04N 19/44

(22) Date of filing: 06.03.2024

(86) International application number:
PCT/CN2024/080296

(87) International publication number:
WO 2024/188124 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.03.2023 CN 202310301666

(71) Applicant: Huawei Technologies Co., Ltd.
Shenzhen, Guangdong 518129 (CN)

(72) Inventors:
• WANG, Danni
 Shenzhen, Guangdong 518129 (CN)
• YANG, Haitao
 Shenzhen, Guangdong 518129 (CN)
• LUO, Yi
 Shenzhen, Guangdong 518129 (CN)
• FENG, Junkai
 Shenzhen, Guangdong 518129 (CN)

(74) Representative: Maiwald GmbH
Engineering
Elisenhof
Elisenstrasse 3
80335 München (DE)

(54) **IMAGE ENCODING METHOD AND APPARATUS, IMAGE DECODING METHOD AND APPARATUS, ENCODER, DECODER, AND SYSTEM**

(57) Image encoding and decoding methods and apparatuses, an encoder, a decoder, and a system are disclosed, and relate to the field of multimedia technologies. The method includes: When a to-be-decoded bitstream of a coding unit in an image bitstream is decoded, or a to-be-encoded coding unit in a current frame is encoded, three factors are considered: image content of the coding unit, a number of lossy bits, and a buffer fullness of a bitstream buffer, and a target number of bits is dynamically set. The encoder encodes the coding unit based on a quantization parameter determined based on the target number of bits. The decoder decodes the bitstream of the coding unit based on the quantization parameter determined based on the target number of bits. This helps improve accuracy of bit rate control, and minimizes a number of coded bits obtained by encoding an image while ensuring quality of a reconstructed image.

FIG. 4A

## Description

This application claims priority to Chinese Patent Application No. 202310301666.X, filed with the China National Intellectual Property Administration on March 13, 2023 and entitled "IMAGE ENCODING AND DECODING METHOD AND APPARATUS, ENCODER, DECODER, AND SYSTEM", which is incorporated herein by reference in its entirety.

## TECHNICAL FIELD

This application relates to the field of multimedia technologies, and in particular, to image encoding and decoding methods and apparatuses, an encoder, a decoder, and a system.

## BACKGROUND

Currently, an encoder performs encoding operations such as prediction, quantization, and entropy encoding on an image frame, to obtain a bitstream. A decoder performs decoding operations such as entropy decoding, dequantization, and prediction and reconstruction on the bitstream, to obtain a reconstructed image of the image frame. A larger value of a quantization parameter indicates less valid information in the image frame included in the bitstream, resulting in poor quality of the reconstructed image. On the contrary, a smaller value of the quantization parameter indicates higher quality of the reconstructed image, and therefore more redundant information of the image frame is included in the bitstream and a number of bits of the bitstream is larger. However, a rate control module clips a quantization parameter of a coding unit based on different pre-divided fullness ranges. Because the different fullness ranges are determined based on empirical data, the rate control module reconstructs the coding unit based on the quantization parameter, which may cause poor quality of a reconstructed image. Therefore, how to determine a quantization parameter used for encoding and decoding an image is an urgent problem to be resolved.

## SUMMARY

This application provides image encoding and decoding methods and apparatuses, an encoder, a decoder, and a system, to resolve a problem of poor quality of a reconstructed image caused by an inaccurate quantization parameter.

According to a first aspect, this application provides an image decoding method. The decoding method is applied to an encoding and decoding system, and the decoding method is performed by a decoder included in the encoding and decoding system. The image decoding method includes: The decoder obtains a to-be-decoded bitstream of a coding unit in an image bitstream; and the decoder determines a target number of bits of the coding unit based on image content of the coding unit, a number of lossy bits, and a buffer fullness of a bitstream buffer, and determines a quantization parameter based on the target number of bits of the coding unit, where the quantization parameter is used to decode the bitstream of the coding unit. The image content indicates complexity of different pixel regions in the coding unit, the number of lossy bits indicates: an expected number of bits obtained by performing lossy coding on the coding unit when the image content is not referred to, the bitstream buffer is used to store a number of coded bits obtained by decoding one or more coding units, and the target number of bits of the coding unit indicates: an expected number of bits obtained by performing lossy coding on the coding unit when the image content of the coding unit is referred to.

Higher complexity of the coding unit indicates more information, that is, less repeated information, included in an image. On the contrary, lower complexity of the coding unit indicates less information, that is, more repeated information, included in the image. When a bitstream of the coding unit is decoded, three factors are considered: image content of the coding unit, a number of lossy bits, and a buffer fullness of a bitstream buffer, a target number of bits is dynamically set, and the bitstream of the coding unit is decoded based on a quantization parameter determined based on the target number of bits. In this way, while ensuring quality of a reconstructed image, a number of coded bits obtained by encoding an image is minimized by improving accuracy of bit rate control.

In a feasible example, the image content of the coding unit includes a complexity level of the coding unit.

For example, the complexity level includes a luminance complexity level.

For another example, the complexity level includes a chrominance complexity level.

For still another example, the complexity level includes a luminance complexity level and a chrominance complexity level.

In this embodiment, image content of a coding unit is represented by a complexity level of the coding unit, so that a complexity level is referred to in a QP decision process of each coding unit. This avoids a problem that accuracy is reduced because the decoder makes the QP decision without considering content included in the coding unit, and helps improve image decoding accuracy and subjective quality of a reconstructed image.

For example, when a video is encoded based on a rate control policy of a constant bit rate, if a bitstream of a coding unit has a small number of bits and image content of a to-be-encoded coding unit is complex, the number of bits of the bitstream of the coding unit may be properly increased and a value of a quantization parameter may be small while ensuring a constant bit rate, to improve quality of a reconstructed image. For another example, when a video is encoded based on a rate control policy of a constant bit rate, if a bitstream of a coding unit has a large number of bits and image content of a to-be-encoded coding unit is simple, a value of a quantization parameter may be large and the number of bits of the bitstream of the coding unit may be properly reduced while ensuring a constant bit rate and quality of a reconstructed image.

In an optional implementation, the image decoding method provided in this application further includes: The decoder decodes the bitstream of the coding unit based on the quantization parameter, to obtain a reconstructed image of the coding unit.

According to a second aspect, this application provides an image encoding method. The encoding method is applied to an encoding and decoding system, and the encoding method is performed by an encoder included in the encoding and decoding system. The image encoding method includes: The encoder obtains a to-be-encoded coding unit in a current frame. In this way, the encoder determines a target number of bits of the coding unit based on image content of the coding unit, a number of lossy bits, and a buffer fullness of a bitstream buffer, and determines a quantization parameter based on the target number of bits of the coding unit, where the quantization parameter is used to encode the coding unit. The image content indicates complexity of different pixel regions in the coding unit, the number of lossy bits indicates: an expected number of bits obtained by performing lossy coding on the coding unit when the image content is not referred to, the bitstream buffer is used to store a number of coded bits obtained by encoding one or more coding units, and the target number of bits of the coding unit indicates: an expected number of bits obtained by performing lossy coding on the coding unit when the image content of the coding unit is referred to.

When a coding unit is encoded, three factors are considered: image content of the coding unit, a number of lossy bits, and a buffer fullness of a bitstream buffer. For a coding unit with lower complexity, a smaller target number of bits is preferably set, and for a coding unit with higher complexity, a larger target number of bits is preferably set, that is, while ensuring quality of a reconstructed image, a number of coded bits obtained by encoding the image is minimized based on complexity of image content expressed by the coding unit, the number of lossy bits, and the buffer fullness of the bitstream buffer.

In an optional implementation, that the encoder determines the target number of bits of the coding unit based on the image content of the coding unit, the number of lossy bits, and the buffer fullness of the bitstream buffer includes: The encoder determines a minimum number of coded bits of the coding unit based on the number of lossy bits and the buffer fullness, and determines a number of lossless coded bits of the coding unit based on the image content of the coding unit, where the number of lossless coded bits indicates an expected number of bits obtained by performing lossless coding on the coding unit; and the encoder determines an offset of the coding unit based on the image content of the coding unit, the buffer fullness, and the number of lossless coded bits, where the offset indicates a difference between a maximum number of coded bits obtained by performing lossy coding on the coding unit and the number of lossy bits. In this way, after the encoder determines a maximum target number of bits of the coding unit based on the offset, the number of lossy bits, and the minimum number of coded bits, the encoder clips the target number of bits of the coding unit based on the maximum target number of bits and the minimum number of coded bits to obtain a clipped target number of bits. The clipped target number of bits is used to determine the quantization parameter of the coding unit.

In an optional example, that the encoder determines the quantization parameter based on the target number of bits of the coding unit includes: The encoder determines the quantization parameter of the coding unit based on the number of lossless coded bits of the coding unit and the clipped target number of bits.

Because the number of lossless coded bits indicates an expected number of bits obtained by performing lossless coding on the coding unit, the number of lossless coded bits represents an expected number of bits in a coding scheme in which information about the coding unit can be fully expressed. The minimum number of coded bits indicates a minimum value of a number of coded bits of the coding unit, and the maximum target number of bits limits a maximum value of the number of coded bits of the coding unit. Lossless coded bit data of the coding unit is measured by using the minimum number of coded bits and the maximum target number of bits, to determine the target number of bits of the coding unit, that is, on the premise that information of the coding unit is fully reserved based on the minimum number of coded bits, a number of coded bits obtained by encoding the image is reduced, thereby improving accuracy of the target number of bits determined by the coding unit.

In a possible implementation, that the encoder determines the offset of the coding unit based on the image content of the coding unit, the buffer fullness, and the number of lossless coded bits includes: The encoder determines a complexity level of the coding unit based on the image content of the coding unit, and determines a number of relative lossless coded bits of the coding unit based on a maximum number of relative lossless coded bits of the coding unit, a maximum number of lossless coded bits of the coding unit, and the number of lossless coded bits, where the maximum number of relative lossless coded bits indicates: a maximum value of the number of relative lossless coded bits of the coding unit at a pixel bit depth of a current frame; and the encoder obtains one or more offsets.

In a first possible example, the encoder obtains a first offset based on the number of relative lossless coded bits of the coding unit, the complexity level, the number of lossless coded bits, and the buffer fullness.

In a second possible example, the encoder obtains a second offset based on the number of relative lossless coded bits of the coding unit and the number of lossy bits.

In a third possible example, the encoder obtains a third offset based on the buffer fullness of the coding unit.

The offset for determining the maximum target number of bits of the coding unit is one of the first offset, the second offset, and the third offset. For example, the offset of the maximum target number of bits of the coding unit is determined in the following manners: After selecting a minimum offset from the first offset and the second offset, the encoder uses a minimum value between the minimum offset and the third offset as the offset of the maximum target number of bits of the coding unit. A minimum value is selected from a plurality of offsets of the maximum target number of bits relative to the number of lossy bits, and the target number of bits of the coding unit is clipped based on the maximum target number of bits corresponding to the minimum value. This helps improve accuracy of the target number of bits of the coding unit, improve accuracy of the quantization parameter, and improve subjective quality of a reconstructed image after the decoder decodes the bitstream of the coding unit based on the quantization parameter.

To obtain better encoding performance and reconstruction quality, different target numbers of bits need to be allocated to different coding units in the image via a rate control module, to maximize a specified total number of coded bits and achieve optimal quality of a decoded image as much as possible. The decoder may determine the offset of the maximum target number of bits of the coding unit in the different offset obtaining manners, to make full use of the number of coded bits, and improve image quality of the reconstructed image.

When the encoder obtains the offset for determining the maximum target number of bits of the coding unit, any one or a combination of the foregoing three possible examples may be used. This is not limited in this application.

An example in which the encoder obtains the first offset is used for description. That the encoder obtains the first offset based on the number of relative lossless coded bits of the coding unit, the complexity level, the number of lossless coded bits, and the buffer fullness includes: The encoder determines whether the number of relative lossless coded bits of the coding unit is greater than or equal to a specified first threshold and whether the complexity level of the coding unit is less than or equal to a specified second threshold. If yes, the encoder processes the number of lossless coded bits and the buffer fullness according to a first rule to obtain the first offset. If no, the encoder processes the number of lossless coded bits and the buffer fullness according to a second rule to obtain the first offset. When input data (namely, the number of lossless coded bits and the buffer fullness) of the two rules is the same, the first offset determined by the encoder according to the first rule is greater than or equal to the first offset determined according to the second rule.

When the encoder determines the first offset according to the first rule, the coding unit is a coding unit that requires subjective quality protection, and the encoder increases the first offset to increase a maximum target number of bits that are allowed to be used by the coding unit, so as to reduce the quantization parameter of the coding unit. This helps improve the subjective quality of the reconstructed image after the bitstream of the coding unit is decoded.

When the encoder determines the first offset according to the second rule, the coding unit is a coding unit that does not require subjective quality protection, and the encoder reduces the first offset to reduce a maximum target number of bits that are allowed to be used by the coding unit, so as to improve the quantization parameter of the coding unit. This helps reduce a number of coded bits of a bitstream obtained by encoding the coding unit, reduce storage space required for storing the bitstream, and improve communication efficiency of transmitting the bitstream.

In another optional implementation, the image encoding method provided in this application further includes: The encoder encodes the coding unit based on the quantization parameter, to obtain the bitstream of the coding unit.

According to a third aspect, this application provides image encoding and decoding apparatuses. The apparatuses include modules configured to perform the method in any one of the first aspect or the possible designs of the first aspect, and modules configured to perform the method in any one of the second aspect or the possible designs of the second aspect.

According to a fourth aspect, this application provides an encoder. The encoder includes at least one processor and a memory, and the memory is configured to store a computer program, so that when the computer program is executed by the at least one processor, the method in any one of the second aspect or the possible designs of the second aspect is implemented.

According to a fifth aspect, this application provides a decoder. The decoder includes at least one processor and a memory, and the memory is configured to store a computer program, so that when the computer program is executed by the at least one processor, the method in any one of the first aspect or the possible designs of the first aspect is implemented.

According to a sixth aspect, this application provides an encoding and decoding system. The encoding and decoding system includes the encoder in the fourth aspect and the decoder in the fifth aspect.

According to a seventh aspect, this application provides a chip. The chip includes a processor and a power supply circuit.

The power supply circuit is configured to supply power to the processor, and the processor is configured to: perform operation steps of the method in any one of the first aspect or the possible implementations of the first aspect, and perform operation steps of the method in any one of the second aspect or the possible implementations of the second aspect.

According to an eighth aspect, this application provides a computer-readable storage medium. The computer-readable storage medium includes computer software instructions.

When the computer software instructions are run in a computer, the computer is enabled to perform operation steps of the method in any one of the first aspect or the possible implementations of the first aspect and perform operation steps of the method in any one of the second aspect or the possible implementations of the second aspect. For example, the computer is the foregoing encoder or decoder.

According to a ninth aspect, this application provides a computer program product. When the computer program product runs on a computer, the computer is enabled to perform operation steps of the method in any one of the first aspect or the possible implementations of the first aspect and perform operation steps of the method in any one of the second aspect or the possible implementations of the second aspect. For example, the computer is the foregoing encoder or decoder.

For beneficial effect of the third aspect to the ninth aspect, refer to the descriptions of any implementation of the first aspect or the second aspect. Details are not described herein again. In this application, the implementations provided in the foregoing aspects may be further combined to provide more implementations.

## BRIEF DESCRIPTION OF DRAWINGS

FIG. 1 is a diagram of a video transmission system according to this application;
FIG. 2 is a diagram of a video encoding and decoding system according to this application;
FIG. 3A and FIG. 3B are a diagram of structures of an encoder and a decoder according to this application;
FIG. 4A and FIG. 4B are a schematic flowchart of an image encoding and decoding method according to this application;
FIG. 5 is a schematic flowchart of an image encoding method according to this application;
FIG. 6 is a diagram of determining a quantization parameter according to this application;
FIG. 7 is a schematic flowchart of an image decoding method according to this application;
FIG. 8 is a diagram of a structure of encoding and decoding apparatuses according to this application; and
FIG. 9 is a diagram of a structure of an image processing system according to this application.

## DESCRIPTION OF EMBODIMENTS

The technical solutions in this application are not only applicable to video coding standards (for example, standards such as H.264 and HEVC), but also applicable to future video coding standards (for example, an H.266 standard). Terms used in implementations of this application are only used to explain specific embodiments of this application, but are not intended to limit this application. The following first briefly describes some concepts that may be used in this application.

**A video** includes a plurality of consecutive images. According to the theory "persistence of vision", human eyes cannot differentiate single static pictures when the plurality of consecutive images change at more than 24 frames (frame) per second. In this case, the plurality of pictures that seem to be smooth and consecutive are the video.

**Video coding** indicates processing of a sequence of pictures that form a video or a video sequence. In the field of video coding, the terms "picture (picture)", "frame (frame)", or "image (image)" may be used as synonyms. Video coding used in this specification indicates video encoding or video decoding. Video encoding is performed at a source side, and typically includes processing (for example, compressing), under a condition that specific image quality is met, a raw video picture to reduce an amount of data required for representing the video picture, for more efficient storage and/or transmission. Video decoding is performed at a destination side, and typically includes reverse processing in comparison with processing of an encoder, to reconstruct the video picture. "Coding" of a video picture in embodiments should be understood as "encoding" or "decoding" of a video sequence. A combination of an encoding part and a decoding part is also referred to as coding (encoding and decoding). Video coding may also be referred to as image coding (image coding) or image compression (image compression). Image decoding (image decoding) is a reverse process of image encoding.

**A video sequence** includes a series of images (picture), an image is further partitioned into slices (slice), and the slice is further partitioned into blocks (block). In video coding, coding processing is performed per block. In some new video coding standards, a concept "block" is further extended. For example, a macroblock (macroblock, MB) is introduced in the H.264 standard. The macroblock may be further partitioned into a plurality of prediction blocks (partition) for predictive coding. In the high efficiency video coding (high efficiency video coding, HEVC) standard, a plurality of block units are obtained through partitioning based on functions according to basic concepts such as a coding unit (coding unit, CU), a prediction unit (prediction unit, PU), and a transform unit (transform unit, TU), and are described by using a new tree-based structure. For example, a CU may be partitioned into smaller CUs based on a quad-tree, and the smaller CU may continue to be partitioned, thereby forming a quad-tree structure. The CU is a basic unit for partitioning and coding a to-be-coded image. A PU and a TU also have a similar tree structure. The PU may correspond to a prediction block, and is a basic unit for predictive coding. The CU is further partitioned into a plurality of PUs in a partitioning mode. The TU may correspond to a transform block, and is a basic unit for transforming a prediction residual. However, all the CU, the PU, and the TU essentially belong to the concept of block (or referred to as coding units).

For example, in HEVC, a CTU is split into a plurality of CUs by using a quad-tree structure represented as a coding tree. A decision on whether to code a picture region through inter-picture (temporal) or intra-picture (spatial) prediction is made at a CU level. Each CU may be further split into one, two, or four PUs based on a PU splitting type. Inside one PU, a same prediction process is applied, and related information is transmitted to a decoder based on the PU. After a residual block is obtained by applying the prediction process based on the PU splitting type, the CU may be partitioned into transform units (transform unit, TU) based on another quad-tree structure similar to the coding tree used for the CU. In recent development of video compression technologies, a quad-tree and binary-tree (Quad-tree and binary tree, QTBT) partition frame is used to partition a coding block. In a QTBT block structure, a CU may have a square or rectangular shape.

In this specification, for ease of description and understanding, a to-be-coded coding unit in a current coded image may be referred to as a current block. For example, in encoding, the current block is a block currently being encoded, and in decoding, the current block is a block currently being decoded. A decoded coding unit that is in a reference image and that is used to predict the current block is referred to as a reference block. In other words, the reference block is a block that provides a reference signal for the current block, where the reference signal indicates a pixel value in the coding unit. A block that is in the reference image and that provides a prediction signal for the current block may be used as a prediction block, where the prediction signal indicates a pixel value, a sample value, or a sample signal in the prediction block. For example, an optimal reference block is found after a plurality of reference blocks are traversed, the optimal reference block provides prediction for the current block, and this block is referred to as a prediction block.

**Lossless video coding** means that a raw video picture may be reconstructed. In other words, a reconstructed video picture has same quality as the raw video picture (assuming that no transmission loss or other data loss occurs during storage or transmission).

**Lossy video coding** means that further compression is performed through, for example, quantization, to reduce a number of bits required for representing a video picture, and the video picture cannot be completely reconstructed at a decoder side. In other words, quality of a reconstructed video picture is lower or worse than that of the raw video picture.

**A bitstream** is a binary stream generated by encoding an image or a video. The bitstream is also referred to as a data stream or a bit rate, namely, a number of bits transmitted in a unit time, and is an important part for picture quality control in image coding. For images with same resolution, a larger bitstream of an image indicates a smaller compression ratio and better picture quality.

**Bit rate control** is a function of adjusting a bit rate during encoding and decoding, and is abbreviated as rate control below. A bit rate control mode includes a constant bit rate (Constant Bit Rate, CBR) and a variable bit rate (Variable Bit Rate, VBR).

**A constant bit rate (Constant Bit Rate, CBR)** means that a stable bit rate is ensured within bit rate statistical time.

**A variable bit rate (Variable Bit Rate, VBR)** means that bit rate fluctuation is allowed within bit rate statistical time, to ensure stable quality of a coded image.

**Quantization** is a process of mapping consecutive values of a signal into a plurality of discrete amplitudes.

**A quantization parameter (quantization parameter, QP)** is used to: in an encoding process, quantize a residual value generated through a prediction operation or a coefficient generated through a transform operation; and in a decoding process, dequantize a syntax element, to obtain a residual value or a coefficient. The quantization parameter is a parameter used in a quantization process. Generally, a larger value of the quantization parameter indicates a more obvious quantization degree, poorer quality of a reconstructed image, and a lower bit rate. On the contrary, a smaller value of the quantization parameter indicates better quality of the reconstructed image and a higher bit rate.

**A bitstream buffer fullness** indicates a proportion of a number of bits of data in a bitstream buffer in a storage capacity of the bitstream buffer. At an encoder side, the number of bits of the data in the bitstream buffer includes a number of coded bits of a coding unit. At a decoder side, the number of bits of the data in the bitstream buffer includes a number of decoded bits of the coding unit.

**Clipping** is an operation of limiting a value within a specified range.

The following describes implementations of this application with reference to the accompanying drawings.

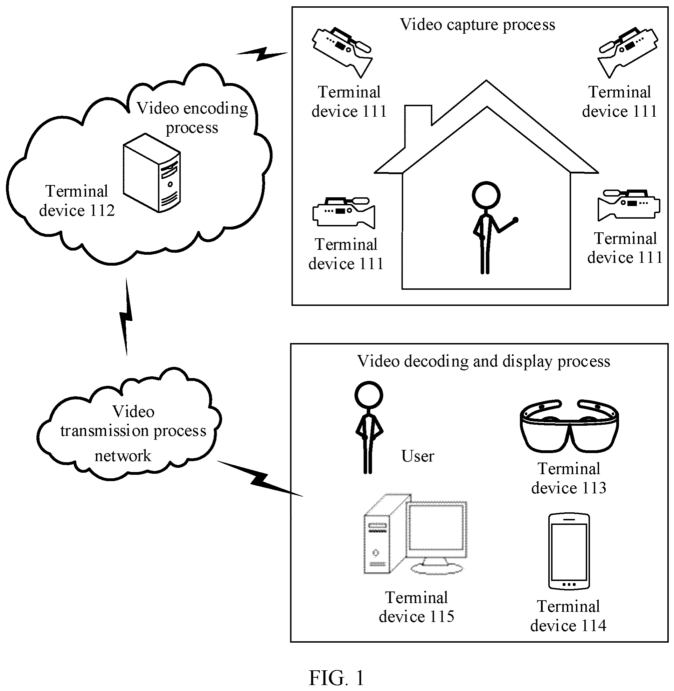

FIG. 1 is a diagram of a video transmission system according to this application. A video processing process includes video capture, video encoding, video transmission, and video decoding and display processes. The video transmission system includes a plurality of terminal devices (such as a terminal device 111 to a terminal device 115 shown in FIG. 1) and a network. The network may implement a video transmission function. The network may include one or more network devices. The network device may be a router, a switch, or the like.

The terminal device shown in FIG. 1 may be, but is not limited to, user equipment (user equipment, UE), a mobile station (mobile station, MS), a mobile terminal (mobile terminal, MT), and the like. The terminal device may be a mobile phone (for example, the terminal device 114 shown in FIG. 1), a tablet computer, a computer with a wireless transceiver function (for example, the terminal device 115 shown in FIG. 1), a virtual reality (Virtual Reality, VR) terminal device (for example, the terminal device 113 shown in FIG. 1), an augmented reality (Augmented Reality, AR) terminal device, a wireless terminal in industrial control (industrial control), a wireless terminal in self-driving (self-driving), a wireless terminal in a smart city (smart city), a wireless terminal in a smart home (smart home), or the like.

As shown in FIG. 1, in different video processing processes, terminal devices are different.

For example, in the video capture process, the terminal device 111 may be a camera apparatus (for example, a video camera or a camera) used for road surveillance, or a mobile phone, a tablet computer, or an intelligent wearable device that has a video capture function.

For another example, in the video encoding process, the terminal device 112 may be a server, or may be a data center. The data center may include one or more physical devices having an encoding function, for example, a server, a mobile phone, a tablet computer, or another encoding device.

For still another example, in the video decoding and display process, the terminal device 113 may be VR glasses, and a user may control a viewing angle range through turning; the terminal device 114 may be a mobile phone, and the user may control a viewing angle range on the mobile phone 114 by performing a touch operation, an air gesture operation, or the like; and the terminal device 115 may be a personal computer, and the user may control a viewing angle range displayed on a display screen via an input device like a mouse or a keyboard.

It may be understood that a video is a general term, and the video is an image sequence including a plurality of consecutive frames, and one frame corresponds to one image. For example, a panoramic video may be a 360° video, or may be a 180° video. In some possible cases, the panoramic video may alternatively be a "large" range video that exceeds a viewing angle range (110° to 120°) of a human eye, for example, a 270° video.

FIG. 1 is merely a diagram. The video transmission system may further include another device that is not shown in FIG. 1. A number and types of terminal devices included in the system are not limited in embodiments of this application.

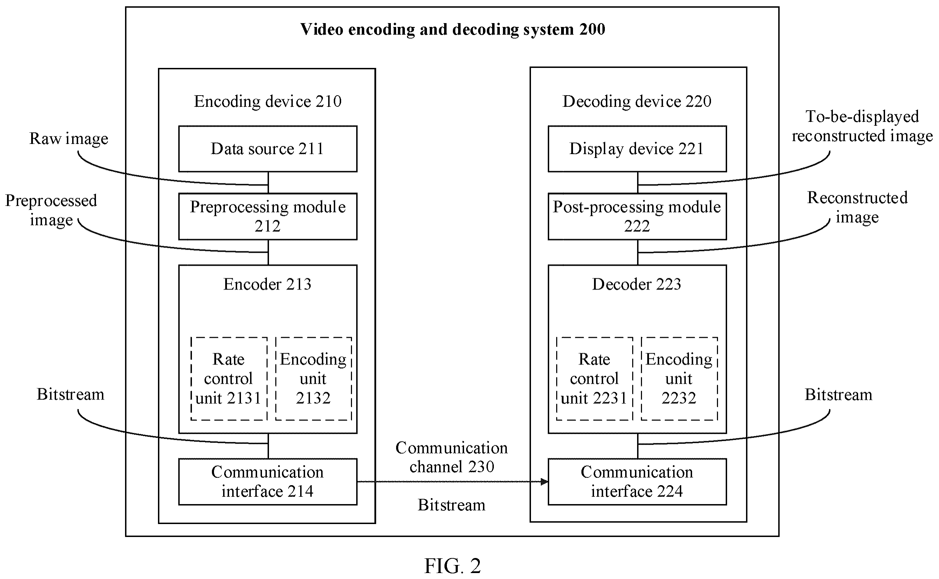

Based on the video transmission system shown in FIG. 1, FIG. 2 is a diagram of a video encoding and decoding system according to this application. The video encoding and decoding system 200 includes an encoding device 210 and a decoding device 220. The encoding device 210 establishes a communication connection to the decoding device 220 through a communication channel 230.

The encoding device 210 may implement a video encoding function. As shown in FIG. 1, the encoding device 210 may be the terminal device 112, or the encoding device 210 may be a data center having a video encoding capability. For example, the data center includes a plurality of servers.

The encoding device 210 may include a data source 211, a preprocessing module 212, an encoder 213, and a communication interface 214.

The data source 211 may include or may be any type of electronic device configured to capture a video, and/or any type of source video generation device, for example, a computer graphics processor configured to generate a computer animation scene or any type of device configured to obtain and/or provide a source video, and a computer-generated source video. The data source 211 may be any type of internal memory or memory that stores the source video. The source video may include a plurality of video streams (bitstreams), images, or the like captured by a plurality of video capture apparatuses (such as cameras).

An image may be considered as a two-dimensional array or matrix of pixels (picture elements). A pixel in the array may also be referred to as a sample. A number of samples in horizontal and vertical directions (or axes) of the array or the image defines a size and/or resolution of the image. For representation of a color, three color components are usually used. To be specific, the image may be represented as or include three sample arrays. For example, in an RBG format or color space, an image includes corresponding red, green, and blue sample arrays. However, in video coding, each pixel is usually represented in a luminance/chrominance format or color space. For example, an image in a YUV format includes a luminance component indicated by Y (sometimes indicated by L) and two chrominance components indicated by U and V. The luminance (luma) component Y represents luminance or gray level intensity (for example, both are the same in a gray-scale image), and the two chrominance (chroma) components U and V represent chrominance or color information components. Correspondingly, the image in the YUV format includes a luminance sample array of luminance sample values (Y) and two chrominance sample arrays of chrominance values (U and V). An image in an RGB format may be transformed or converted into an image in a YUV format and vice versa. This process is also referred to as color conversion or transform. If an image is monochrome, the image may include only a luminance sample array. In this application, an image transmitted by the data source 211 to the encoder 213 may also be referred to as raw image data or a source image.

The preprocessing module 212 is configured to: receive a source video, and preprocess the source video, to obtain a preprocessed image, for example, a panoramic video or a plurality of frames of images. For example, preprocessing performed by the preprocessing module 212 may include color format conversion (for example, conversion from RGB to YCbCr), octree structuring, and video stitching.

The encoder 213 is configured to: receive the preprocessed image, and encode the preprocessed image to obtain encoded data (for example, a bitstream). For example, the encoder 213 may include a rate control unit 2131 and an encoding unit 2132. The rate control unit 2131 is configured to determine a quantization parameter for encoding each coding unit in a current frame, so that the encoding unit 2132 predicts, quantizes, and encodes the preprocessed image based on the quantization parameter, to obtain the bitstream. For example, after determining a target number of bits of the coding unit based on image content of the coding unit, a number of lossy bits, and a buffer fullness of a bitstream buffer, the encoder 213 determines a quantization parameter of the coding unit based on the target number of bits, and encodes the coding unit based on the quantization parameter.

The communication interface 214 of the encoding device 210 may be configured to receive the bitstream and send the bitstream (or any other processed version of the bitstream) to another device like the decoding device 220, or any other device through the communication channel 230 for storage, display, direct reconstruction of the raw image, or the like.

Optionally, the encoding device 210 includes the bitstream buffer, and the bitstream buffer is used to store a bitstream corresponding to one or more coding units.

The decoding device 220 may implement a function of image decoding or video decoding. As shown in FIG. 1, the decoding device 220 may be any one of the terminal device 113 to the terminal device 115 shown in FIG. 1.

The decoding device 220 may include a display device 221, a post-processing module 222, a decoder 223, and a communication interface 224.

The communication interface 224 in the decoding device 220 is configured to receive a bitstream (or any other processed version of the bitstream) from the encoding device 210 or from any other encoding device like a storage device.

The communication interface 214 and the communication interface 224 may be configured to send or receive the bitstream through a direct communication link between the encoding device 210 and the decoding device 220, for example, through a direct wired or wireless connection, or via any type of network like a wired or wireless network or any combination thereof, or any type of private and public network, or any type of combination thereof.

The communication interface 224 corresponds to the communication interface 214, and may be configured to, for example, receive transmitted data, and process the transmitted data through any type of corresponding transmission decoding or processing and/or decapsulation to obtain a bitstream.

The communication interface 224 and the communication interface 214 each may be configured as a unidirectional communication interface indicated by an arrow, in FIG. 2, that corresponds to the communication channel 230 and that is directed from the encoding device 210 to the decoding device 220, or a bidirectional communication interface; and may be configured to: send and receive a message or the like to establish a connection, and determine and exchange any other information related to a communication link or data transmission like transmission of encoded compressed data (for example, a bitstream), and the like.

The decoder 223 is configured to: receive the encoded data, and decode the encoded data, to obtain decoded data (an image, a video, or the like). For example, the decoder 223 performs entropy decoding, dequantization, and prediction and reconstruction on the bitstream to obtain a reconstructed image. The decoder 223 may include a rate control unit 2231 and a decoding unit 2232. The rate control unit 2231 is configured to determine a quantization parameter for decoding each coding unit in a current frame, so that the decoding unit 2232 decodes, dequantizes, and predicts and reconstructs the bitstream based on the quantization parameter, to obtain the reconstructed image. The decoder 223 may determine a target number of bits of the coding unit based on image content of the coding unit, a number of lossy bits, and a buffer fullness of a bitstream buffer, and decode the bitstream of the coding unit based on the quantization parameter determined based on the target number of bits.

The post-processing module 222 is configured to perform post-processing on the decoded data obtained through decoding to obtain post-processed data (for example, a to-be-displayed reconstructed image). Post-processing performed by the post-processing module 222 may include, for example, color format conversion (for example, conversion from YCbCr to RGB), octree reconstruction, video splitting and fusion, or any other processing for generating data for display, for example, by the display device 221.

The display device 221 is configured to receive the post-processed data for display to a user, a viewer, or the like. The display device 221 may be or include any type of display for representing the reconstructed image, for example, an integrated or external display screen or display. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS), a digital light processor (digital light processor, DLP), or any type of other display screen.

In an optional implementation, the encoding device 210 and the decoding device 220 may transmit the encoded data via a data forwarding device. For example, the data forwarding device may be a router or a switch.

The structure of the foregoing encoding and decoding system is merely an example for description. In some possible implementations, the encoding and decoding system may further include another device. For example, the encoding and decoding system may further include a device-side device or a cloud-side device. After obtaining a raw image, a capture device (for example, the terminal device 111 in FIG. 1) preprocesses the raw image to obtain a preprocessed image, and transmits the preprocessed image to the device-side device or the cloud-side device (for example, the terminal device 112 in FIG. 1), and the device-side device or the cloud-side device implements a function of encoding or decoding the preprocessed image.

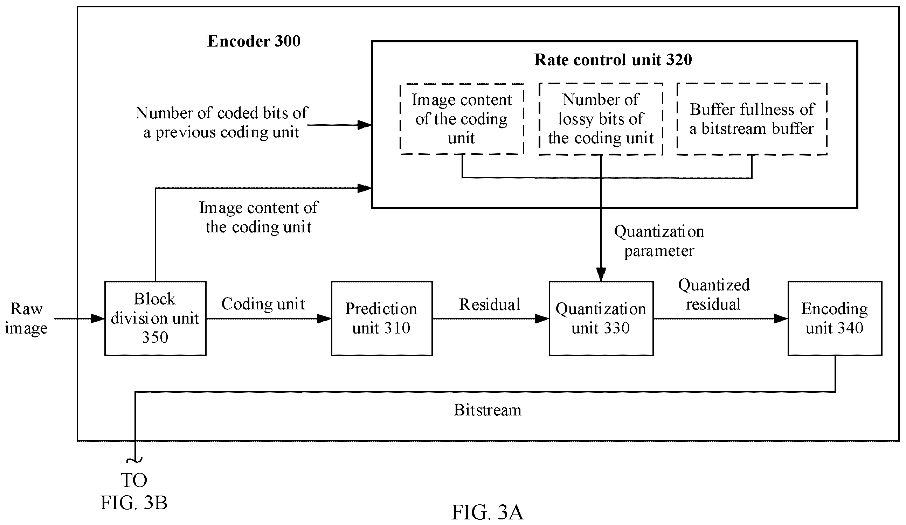

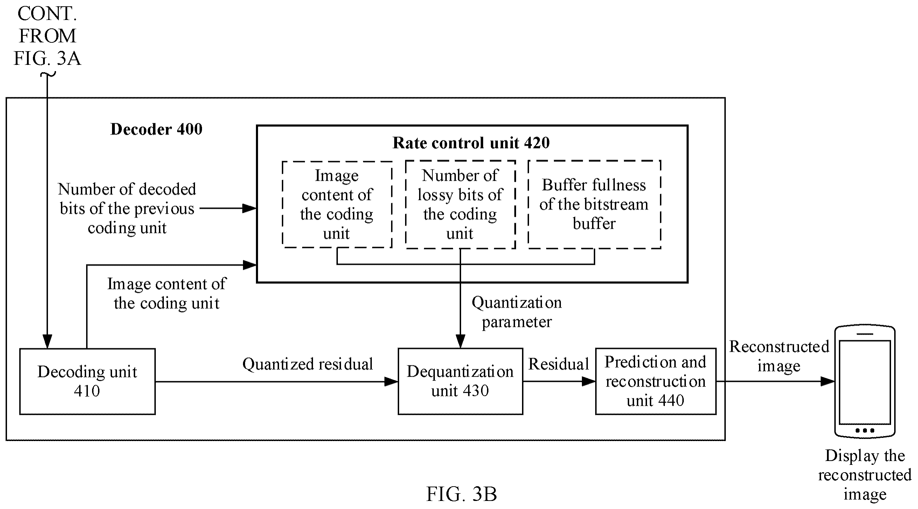

Image encoding and decoding methods provided in this application are applied to an encoder side and a decoder side. Structures of an encoder and a decoder are described in detail with reference to FIG. 3A and FIG. 3B. As shown in FIG. 3A and FIG. 3B, the encoder 300 includes a prediction unit 310, a rate control unit 320, a quantization unit 330, an encoding unit 340, and a block division unit 350.

The block division unit 350 is configured to divide a raw image into a plurality of coding units.

The rate control unit 320 is configured to: determine a target number of bits of the coding unit based on image content of a current to-be-encoded coding unit output by the block division unit 350, a number of lossy bits, and a buffer fullness of a bitstream buffer, and determine a quantization parameter based on the target number of bits.

In some possible embodiments, when the encoder 300 encodes a frame of image and then transmits a bitstream of the image frame to the decoder 400, the data in the bitstream buffer includes the bitstream of the image frame, and the number of bits of the data in the bitstream buffer includes a number of bits of the bitstream of the image frame.

In some other possible embodiments, when the encoder 300 encodes a coding unit in a frame of image and then transmits a bitstream of the coding unit to the decoder 400, the data in the bitstream buffer includes a bitstream of one or more coding units, and the number of bits of the data in the bitstream buffer includes a number of coded bits of the bitstream of the one or more coding units. It may be understood that the bitstream of the one or more coding units may be obtained by subtracting a bitstream of an encoded coding unit transmitted from the encoder 300 to the decoder 400 from a bitstream of a coding unit encoded by the encoder 300.

The prediction unit 310 is configured to: perform intra-frame prediction on the coding unit output by the block division unit 350, to obtain a predicted number of bits, and output a residual between an original number of bits of the coding unit and the predicted number of bits. For example, for an explanation of intra-frame prediction, refer to intra-frame prediction of HEVC. Intra-frame prediction is a common method for removing spatial redundant information from a raw image. To be specific, a reconstructed pixel of an adjacent code block is used as a reference value to predict a current coding unit. This is equivalent to that a coding unit in the raw image is correlated with a coding block surrounding the coding unit. A pixel value of the current coding unit may be estimated based on a surrounding reconstructed coding unit. The estimated pixel value is a prediction value, and quantization and entropy encoding are performed on a residual between the prediction value and an original value of the current coding unit. A prediction residual is usually transmitted through encoding. At the decoder side, the same prediction process is performed, to obtain the prediction value of the current coding unit, and then the prediction value is added to the obtained residual, to obtain a reconstruction value of the current coding unit.

The quantization unit 330 is configured to quantize, based on the quantization parameter output by the rate control unit 320, the residual output by the prediction unit 310, to obtain a quantized residual.

The encoding unit 340 is configured to encode the quantized residual output by the quantization unit 330, to obtain the bitstream of the coding unit. For example, entropy encoding is performed on the quantized residual output by the quantization unit 330.

The structure of the decoder is described in detail with reference to FIG. 3A and FIG. 3B. As shown in FIG. 3A and FIG. 3B, the decoder 400 includes a decoding unit 410, a rate control unit 420, a dequantization unit 430, and a prediction and reconstruction unit 440.

The decoding unit 410 is configured to decode the bitstream of the coding unit, to obtain the quantized residual and the image content.

The rate control unit 420 determines the target number of bits of the coding unit based on the image content of the current to-be-decoded coding unit output by the decoding unit 410, the number of lossy bits, and the buffer fullness of the bitstream buffer, and determines the quantization parameter based on the target number of bits.

In some embodiments, when the encoder 300 encodes a frame of image and then transmits a bitstream of the image frame to the decoder 400, the data in the bitstream buffer of the decoder 400 includes decoded data of the image frame, and the number of bits of the data in the bitstream buffer includes a number of bits of the decoded data of the image frame.

In some other embodiments, when the encoder 300 encodes a coding unit in a frame of image and then transmits a bitstream of the coding unit to the decoder 400, the data in the bitstream buffer of the decoder 400 includes decoded data of one or more coding units, and the number of bits of the data in the bitstream buffer includes a number of bits of the decoded data of the one or more coding units.

The dequantization unit 430 is configured to perform, based on the quantization parameter output by the rate control unit 420, dequantization on the quantized residual output by the decoding unit 410, to obtain the residual.

The prediction and reconstruction unit 440 is configured to perform prediction and reconstruction on the residual output by the dequantization unit 430, to obtain a reconstructed image, so that a display displays the reconstructed image.

To resolve a problem of how to determine a quantization parameter used for encoding and decoding an image, to ensure quality of a reconstructed image, this application provides image encoding and decoding methods. To be specific, three factors are considered: image content of the coding unit, a number of lossy bits, and a buffer fullness of a bitstream buffer, and a target number of bits is dynamically set. At an encoder side, the coding unit is encoded based on the quantization parameter determined based on the target number of bits. Therefore, a number of coded bits obtained by encoding the image is reduced while ensuring the quality of the reconstructed image.

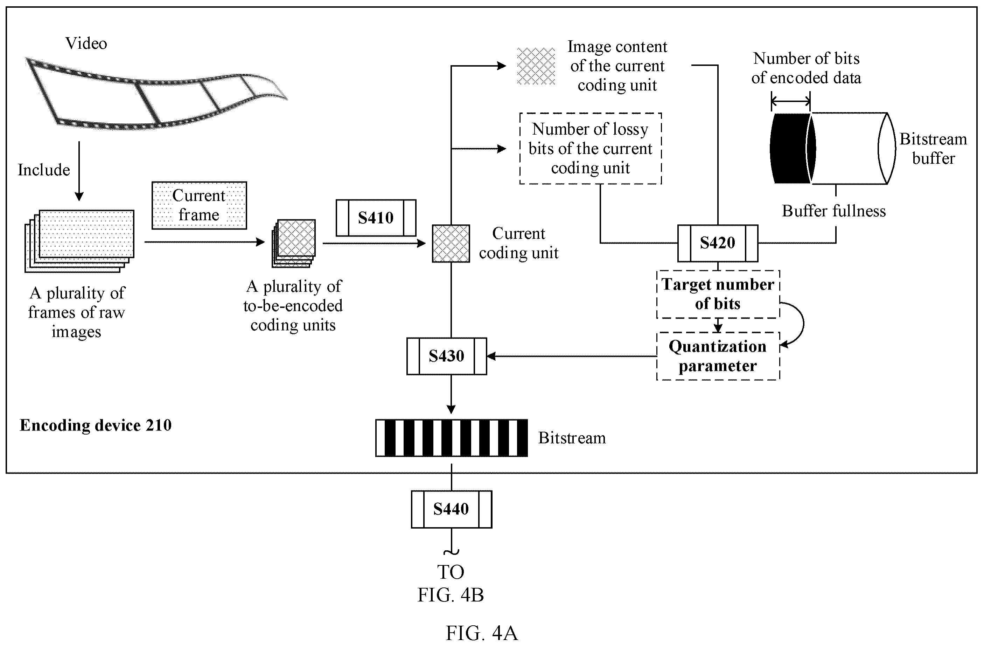

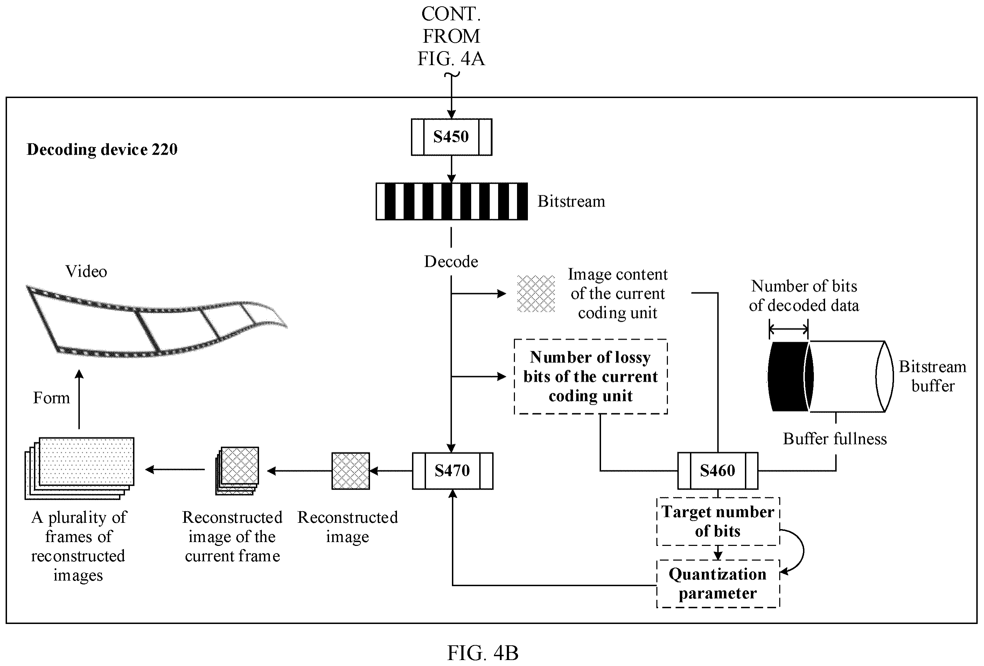

The following describes an image encoding and decoding process with reference to the accompanying drawings. FIG. 4A and FIG. 4B are a schematic flowchart of image encoding and decoding methods according to this application. Herein, an example in which the encoding device 210 and the decoding device 220 in FIG. 2 perform an image encoding and decoding process is used for description. As shown in FIG. 4A and FIG. 4B, the methods include the following steps.

S410: The encoding device 210 obtains a to-be-encoded coding unit in a current frame.

As described in the foregoing embodiment, if the encoding device 210 includes the data source 211, the encoding device 210 may capture a raw image via the data source 211. Optionally, the encoding device 210 may alternatively receive a raw image captured by another device, or obtain a raw image from a memory in the encoding device 210 or another memory. The raw image may include at least one of a real-world image captured in real time, an image stored in a device, and an image synthesized from a plurality of images. A manner of obtaining the raw image and a type of the raw image are not limited in this embodiment.

The current frame is a frame of image or the raw image that is encoded or decoded at a current moment. A previous frame is a frame of image or the raw image that is encoded or decoded at a moment before the current moment. The previous frame may be a frame at a moment that is one or more moments before the current moment.

The encoding device 210 may divide the current frame, to obtain a plurality of coding units, and encode the plurality of coding units.

S420: The encoding device 210 determines a target number of bits of the coding unit based on image content of the coding unit, a number of lossy bits, and a buffer fullness of a bitstream buffer, and determines a quantization parameter based on the target number of bits of the coding unit.

The number of lossy bits indicates: an expected number of bits obtained by performing lossy coding on the coding unit when the image content of the coding unit is not referred to.

The bitstream buffer is used to store a number of coded bits obtained by encoding one or more coding units. The buffer fullness indicates a proportion of an amount of data stored in the bitstream buffer in a storage capacity of the bitstream buffer. Before encoding, a physical buffer for storing a bitstream may be preconfigured in the memory. The buffer fullness of the bitstream buffer may be obtained based on a number of bits of a bitstream that is of an encoded coding unit and that is stored in the physical buffer.

The target number of bits of the coding unit indicates: an expected number of bits obtained by performing lossy coding on the coding unit when the image content of the coding unit is referred to.

The image content of the coding unit indicates complexity of different pixel regions in the coding unit, for example, complexity of a color, a texture, a shape, and the like of the pixel region. For example, the complexity may indicate a relative value of an expected number of bits determined by encoding the coding unit.

In some optional implementations, the image content includes a complexity level of the coding unit.

In a first example, the complexity level includes a luminance complexity level.

In a second example, the complexity level includes a chrominance complexity level.

In a third example, the complexity level includes a luminance complexity level and a chrominance complexity level.

In this embodiment, image content of a coding unit is represented by a complexity level of the coding unit, so that a complexity level is referred to in a QP decision process of each coding unit. This avoids a problem that accuracy is reduced because the encoding device makes the QP decision without considering content included in the coding unit, and helps improve image encoding accuracy and image encoding quality.

In an optional implementation, a process of determining the complexity level of the coding unit includes step ① to step ④.

Step ①: The encoding device 210 divides the coding unit into a plurality of sub-blocks.

In a possible example, the coding unit may be first divided into coding blocks on different channels, and then division is performed for a specific channel to obtain a plurality of sub-blocks on the specific channel. The different channels herein include a Y channel, a U channel, and a V channel.

In another possible example, the coding unit may alternatively not be divided into coding blocks on different channels, and the coding unit is directly divided into the plurality of sub-blocks.

The foregoing two possible examples are merely possible implementations provided in this embodiment, and should not be construed as a limitation on this application.

Step ②: The encoding device 210 obtains a texture complexity level of each sub-block in the plurality of sub-blocks.

The texture complexity level in step ② is one of a plurality of specified complexity levels. The plurality of specified complexity levels may include a first level, a second level, a third level, a fourth level, or the like. This is not limited in this application. It should be noted that different complexity levels correspond to different complexity value ranges.

Step ③: The encoding device 210 obtains a texture complexity level of the coding unit based on a plurality of texture complexity levels of the plurality of sub-blocks.

For step ③, this example provides a possible implementation: The encoding device 210 processes the plurality of texture complexity levels of the plurality of sub-blocks according to a specified rule to determine the complexity level of the coding unit. The specified rule may be, for example, addition, deduplication, or weighting.

For example, the encoding device 210 adds the plurality of texture complexity levels of the plurality of sub-blocks to determine the complexity level of the coding unit based on a sum of the added texture complexity levels.

For another example, the encoding device 210 removes repeated texture complexity levels from the plurality of texture complexity levels of the plurality of sub-blocks, and selects a highest texture complexity level as the complexity level of the coding unit.

For still another example, the encoding device 210 sets different weights for different sub-blocks to perform weighted summation on the weights and texture complexity levels of all the sub-blocks, so as to determine the complexity level of the coding unit.

In this embodiment, the encoding device processes the plurality of texture complexity levels of the plurality of sub-blocks according to the specified rule, for example, addition, deduplication, or weighting, to determine the complexity level of the coding unit. This avoids a problem that the complexity level of the coding unit is inaccurately determined based on only a texture complexity level of a single sub-block or a few sub-blocks, and helps improve accuracy of input information for a QP decision on the coding unit. In this way, a QP value of the coding unit better matches the image content of the coding unit. This improves image encoding effect.

Step ④: The encoding device 210 determines the complexity level of the coding unit based on the texture complexity level of the coding unit.

The texture complexity level is used as an example, and a process of calculating the complexity level is as follows: The encoding device divides the coding unit into several sub-blocks, and gradually calculates differences between adjacent pixel values in a horizontal direction, a vertical direction, and an oblique direction (for example, a direction of 45° or -135°) for each sub-block; and the encoding device sums absolute values of the differences to obtain a texture complexity value corresponding to each sub-block, and compares the texture complexity value with an agreed threshold to obtain a complexity type (for example, the texture complexity level) of the sub-block. Therefore, after performing a rule operation on the texture complexity type of each sub-block, the encoding device obtains the texture complexity level of the current coding unit.

In this embodiment, texture complexity indicates a grayscale change in an image. After obtaining the texture complexity level of each sub-block, the encoding device determines the complexity level of the coding unit based on the texture complexity, so that a grayscale change in the coding unit is referred to in a QP decision process of the coding unit. This helps improve image encoding accuracy and image encoding quality.

Optional, the encoding device may further determine the complexity level of the coding unit based on other complexity. For example, the other complexity may be an information entropy of a bit plane in an image, a block copy (Intra block copy, IBC) complexity level, or the like. In some optional examples, the encoding device may determine the complexity level of the coding unit based on the foregoing texture complexity and the other complexity. This is not limited in this application.

An IBC complexity level of the coding unit is used as an example, and a process of calculating the complexity level is as follows: The coding unit obtains an IBC similar prediction sample matrix in a similar IBC prediction mode; the encoding device divides the coding unit into several sub-blocks, and calculates a sum of absolute values of differences between IBC similar prediction samples and an original value for each sub-block, where the sum of absolute values is referred to as a sub-block SAD; the encoding device compares the sub-block SAD with an agreed threshold to obtain an IBC complexity level of the sub-block; and after performing a rule operation on the IBC complexity level of each sub-block, the encoding device obtains the IBC complexity level of the current coding unit.

The foregoing two complexity level obtaining manners are merely examples provided in this embodiment, and should not be understood as a limitation on this application. After obtaining the texture complexity level and the IBC complexity level of the coding unit, the encoding device may further use a minimum value between the texture complexity level and the IBC complexity level as an image complexity level of the current coding unit, where the image complexity level is one of preset K values.

For a specific explanation of determining the quantization parameter by the encoding device 210, refer to descriptions of steps S510 to S550. Details are not described herein again.

S430: The encoding device 210 encodes the coding unit based on the quantization parameter, to obtain a bitstream of the coding unit.

The encoding device 210 may perform an encoding operation like transformation, quantization, or entropy encoding on the coding unit, to generate the bitstream, so as to implement data compression on the to-be-encoded coding unit. A number of bits of the bitstream of the coding unit may be less than or greater than the target number of bits. For a specific method for generating the bitstream, refer to the conventional technology and the descriptions of the encoding unit 340 in the foregoing embodiment.

S440: The encoding device 210 sends the bitstream to the decoding device 220.

In a first possible example, the encoding device 210 may send a bitstream of a video to the decoding device 220 after encoding the entire video.

In a second possible example, the encoding device 210 may alternatively encode on the raw image in real time on a per-frame basis, and send a bitstream of one frame after encoding the frame.

In a third possible example, the encoding device 210 encodes a coding unit of the raw image, and sends a bitstream of the coding unit after encoding the coding unit.

The foregoing three examples are merely possible implementations of sending the bitstream provided in this embodiment, and should not be understood as a limitation on this application. For a specific method for sending the bitstream by the encoding device, refer to the conventional technology and the descriptions of the communication interface 214 and the communication interface 224 in the foregoing embodiment.

S450: The decoding device 220 obtains the to-be-decoded bitstream of the coding unit in an image bitstream.

S460: The decoding device 220 determines the target number of bits based on the image content of the coding unit and a number of bits of data in the bitstream buffer, and determines the quantization parameter based on the target number of bits of the coding unit.

After receiving the bitstream of the coding unit, the decoding device 220 determines the target number of bits of the coding unit based on the image content of the coding unit, the number of lossy bits, and the buffer fullness of the bitstream buffer, and determines the quantization parameter based on the target number of bits. For a specific explanation of determining the quantization parameter, refer to descriptions of steps S510 to S550.

S470: The decoding device 220 decodes the bitstream of the coding unit in the current frame based on the quantization parameter, to obtain a reconstructed image.

The decoding device 220 decodes encoded data of the coding unit based on the quantization parameter determined based on the target number of bits of the coding unit, to obtain the reconstructed image.

The decoding device 220 displays the reconstructed image. Alternatively, the decoding device 220 transmits the reconstructed image to another display device, and the another display device displays the reconstructed image.

For a reverse process of encoding a coding unit, when a bitstream of the coding unit is decoded, three factors are considered: image content of the coding unit, a number of lossy bits, and a buffer fullness of a bitstream buffer, a target number of bits is dynamically set, and the bitstream of the coding unit is decoded based on a quantization parameter determined based on the target number of bits. In this way, while ensuring quality of a reconstructed image, a number of coded bits obtained by decoding an image is minimized by improving accuracy of bit rate control.

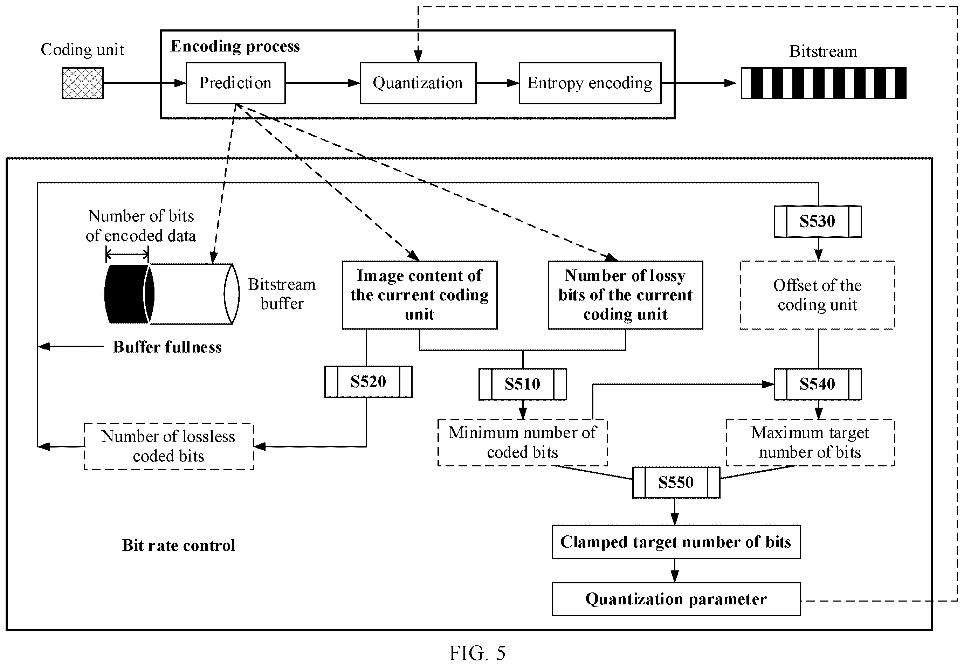

The following describes in detail a process of determining a quantization parameter with reference to the accompanying drawings. FIG. 5 is a schematic flowchart of an image encoding method according to this application. Herein, an example in which the encoder 300 in FIG. 3A and FIG. 3B performs a process of determining a quantization parameter is used for description. A method procedure in FIG. 5 is a description of a specific operation process included in S420 and S460 in FIG. 4A and FIG. 4B. As shown in FIG. 5, the method includes steps S510 to S550.

S510: The encoder 300 determines a minimum number of coded bits of a coding unit based on a number of lossy bits and a buffer fullness.

In some optional implementations, the number of lossy bits is also referred to as an expected number of block bits or a number of lossy coded bits of the coding unit.

The encoder 300 determines an adjustment value of the number of lossy bits based on a number of bits of an encoded coding unit in a bitstream buffer. Further, the encoder 300 determines the number of lossy bits based on an initial value of the number of lossy bits and the adjustment value of the number of lossy bits. The number of lossy bits satisfies Formula (1).

$$\mathrm{Bpp} = \mathrm{Bpp_{INI}} + \mathrm{Bpp_{ADJ}} \text{ Formula (1)}$$

Herein, Bpp indicates the number of lossy bits; $\mathrm{Bpp_{INI}}$ indicates the initial value of the number of lossy bits; and $\mathrm{Bpp_{ADJ}}$ indicates the adjustment value of the number of lossy bits. The initial value of the number of lossy bits is determined and obtained based on a number of bits of the coding unit and a compression ratio. The compression ratio is determined based on a requirement of an actual application scenario.

The adjustment value of the number of lossy bits is in direct proportion to $(\mathrm{RcBuf_{END}} - \mathrm{RcBuf_T})$. $\mathrm{RcBuf_{END}}$ indicates an expected number of bits in the bitstream buffer at an end of encoding or decoding of the current frame. $\mathrm{RcBuf_T}$ indicates

the number of bits of the encoded coding unit in the bitstream buffer.

If a difference of $RcBuf_{END}-ReBuf_T$ is greater than 0, it indicates that the number of bits of the encoded coding unit in the bitstream buffer does not exceed the expected number of bits in the bitstream buffer at the end of encoding or decoding of the current frame, and a larger target number of bits may be allocated to the unencoded coding unit.

If a difference of $RcBuf_{END}-RcBuf_T$ is less than 0, it indicates that the number of bits of the encoded coding unit in the bitstream buffer exceeds the expected number of bits in the bitstream buffer at the end of encoding or decoding of the current frame, and a smaller target number of bits may be allocated to the unencoded coding unit.

If a difference of $RcBuf_{END}-RcBuf_T$ is equal to 0, it indicates that the number of bits of the encoded coding unit in the bitstream buffer is equal to the expected number of bits in the bitstream buffer at the end of encoding or decoding of the current frame, and a smaller target number of bits may be allocated to the unencoded coding unit.

Different coding units in the current frame correspond to same $RcBuf_{END}$. Coding units in different frames may correspond to same or different $RcBuf_{END}$.

The bitstream buffer fullness satisfies Formula (2).

$$F=RcBuf_T/RcBuf_{MAX}+X0 \quad \text{Formula (2)}$$

Herein, F indicates the bitstream buffer fullness; $RcBuf_T$ indicates the number of bits of the encoded coding unit in the bitstream buffer; $RcBuf_{MAX}$ indicates an allowed maximum number of bits in the bitstream buffer; and X0 is an agreed parameter. To maintain a number of bits in the physical buffer, if the bitstream buffer fullness is high, the expected number of bits obtained by performing lossy coding on the coding unit when the content of the coding unit is referred to is reduced, to reduce the number of bits in the physical buffer.

A manner of obtaining the minimum number of coded bits is as Formula (3).

$$B_{MIN}=MAX((K4-K5 \times F) \times Bpp+K6, 0) \quad \text{Formula (3)}$$

Herein, F indicates an input buffer fullness; Bpp indicates an input expected number of block bits (the number of lossy bits); and K4, K5, and K6 are agreed parameters.

S520: The encoder 300 determines a number of lossless coded bits of the coding unit based on image content of the coding unit.

The encoder 300 may determine a complexity level of the coding unit based on the image content of the coding unit. For details, refer to the related descriptions of S420. Details are not described herein again.

The number of lossless coded bits indicates an expected number of bits obtained by performing lossless coding on the coding unit.

In some embodiments, the number of lossless coded bits may be a default value configured based on experience.

In some other embodiments, the encoder 300 sets, based on a number of bits of an encoded coding unit, an expected number of bits obtained by performing lossless coding on an unencoded coding unit. For example, the encoder 300 may perform table lookup based on an identifier of the coding unit and the complexity level of the coding unit, to determine the number of lossless coded bits of the coding unit. It is assumed that $B_{LL}$ indicates the number of lossless coded bits. $B_{LL}=Record_{BLL}[T][k]$, where T indicates the identifier of the coding unit, and k indicates the complexity level of the coding unit.

S530: The encoder 300 determines an offset of the coding unit based on the image content of the coding unit, the buffer fullness, and the number of lossless coded bits.

The offset indicates a difference between a maximum number of coded bits obtained by performing lossy coding on the coding unit and the number of lossy bits.

Optionally, according to different lossy coding schemes, the coding unit corresponds to different offsets of the maximum number of coded bits.

It should be noted that, before the encoder 300 determines the different offsets, the encoder 300 may determine the number of relative lossless coded bits of the coding unit based on a maximum number of relative lossless coded bits of the coding unit, a maximum number of lossless coded bits of the coding unit, and the number of lossless coded bits.

The maximum number of relative lossless coded bits of the coding unit indicates: a maximum value of the number of relative lossless coded bits of the coding unit at a pixel bit depth of a current frame.

For example, the number of relative lossless coded bits of the coding unit may be determined by using Formula (4).

$$B_{relative}=Clip(0, RcMaxRelativeBits, B_{LLMAX}-B_{LL}) \quad \text{Formula (4)}$$

Herein, $B_{relative}$ indicates the number of relative lossless coded bits of the coding unit; RcMaxRelativeBits indicates a maximum number of relative lossless coded bits of the coding unit determined by the rate control unit; $B_{LLMAX}$ indicates a maximum number of lossless coded bits in the rate control unit at a current pixel bit depth; $B_{LL}$ indicates the number of lossless coded bits of the current coding unit; and Clip indicates that a value of $B_{LLMAX}$-$B_{LL}$ is limited to a range between 0 and RcMaxRelativeBits, to be specific, a minimum value of $B_{LLMAX}$-$B_{LL}$ is 0, and a maximum value of $B_{LLMAX}$-$B_{LL}$ is RcMaxRelativeBits.

In a first possible example, the encoder 300 obtains a first offset based on the number of relative lossless coded bits of the coding unit, the complexity level, the number of lossless coded bits, and the buffer fullness.

For example, the encoder 300 compares the number of relative lossless coded bits of the coding unit with a specified first threshold, compares the complexity level of the coding unit with a specified second threshold, and in the case of different comparison results, processes the number of lossless coded bits of the coding unit and the buffer fullness of the bitstream buffer to obtain an offset (the first offset) of a first maximum number of coded bits.

The first threshold is a specified threshold RcRelativeTh of a number of relative lossless coded bits for protection. In a feasible case, RcRelativeTh is also referred to as a bit rate control relative lossless coded bit rate threshold, and RcRelativeTh is a 10-bit unsigned integer.

The second threshold is a specified complexity threshold RcComplexTh for protection. In a feasible case, RcComplexTh is also referred to as a bit rate control complexity level threshold, and RcComplexTh is a 3-bit unsigned integer.

The foregoing two thresholds may be preset, or may be customized based on a requirement of a user for encoding and decoding performance. This is not limited in this application.

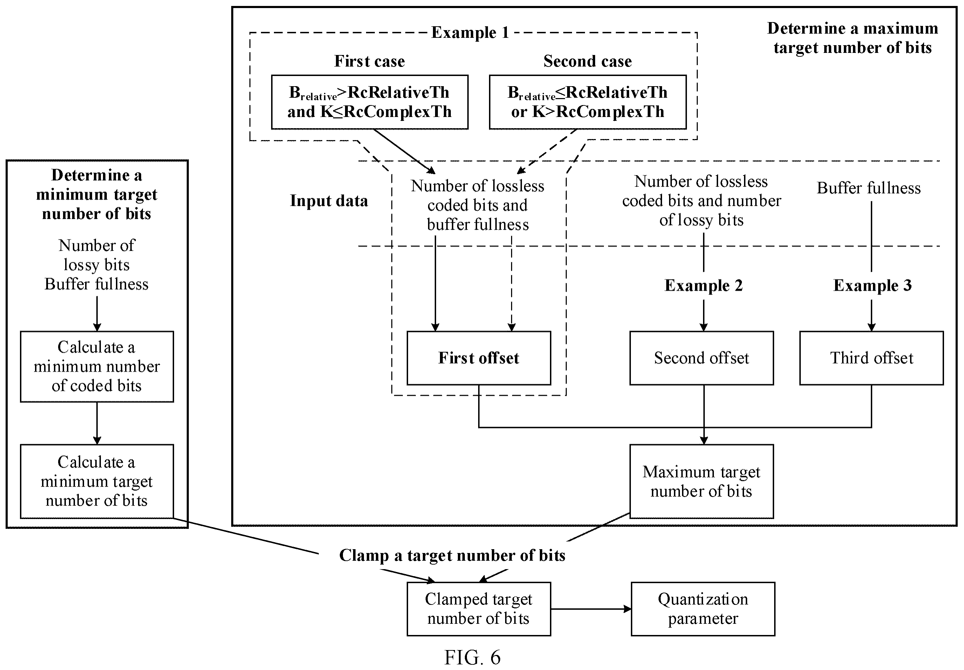

As shown in Example 1 in FIG. 6, two possible cases are provided for different comparison results obtained by the encoder 300 by comparing the number of relative lossless coded bits of the coding unit with the specified first threshold and comparing the complexity level of the coding unit with the specified second threshold.

In a first case, the number of relative lossless coded bits $B_{relative}$ of the coding unit is greater than RcRelativeTh, and the complexity level (K) of the coding unit is less than or equal to RcComplexTh. In this case, the encoder 300 processes the number of lossless coded bits and the buffer fullness according to a first rule to obtain the first offset. The first rule may be implemented by using Formula (5).

$$bppOffset1 = K9 - (K10 \times F + K11) - (Sr - Scale) \times B_{relative} \quad \text{Formula (5)}$$

Herein, bppOffset1 indicates the offset of the first maximum number of coded bits (namely, the first offset); F indicates the buffer fullness of the bitstream buffer; $B_{relative}$ indicates the number of relative lossless coded bits of the coding unit; Sr indicates a parameter related to an image chroma sampling rate; Scale indicates a specified subjective quality protection strength value; and K9, K10, and K11 are agreed parameters.

When the encoder determines the first offset according to the first rule, the coding unit is a coding unit that requires subjective quality protection, and the encoder increases the first offset by setting Scale to increase a maximum target number of bits (Bpp+bppOffset1) that are allowed to be used by the coding unit, so as to reduce the quantization parameter of the coding unit. This helps improve the subjective quality of the reconstructed image after the bitstream of the coding unit is decoded.

In a second case, the number of relative lossless coded bits $B_{relative}$ of the coding unit is less than or equal to RcRelativeTh, or the complexity level of the coding unit is greater than RcComplexTh. In this case, the encoder 300 processes the number of lossless coded bits and the buffer fullness according to a second rule to obtain the first offset. The second rule may be implemented by using Formula (6).

$$bppOffset1 = K9 - (K10 \times F + K11) - Sr \times B_{relative} \quad \text{Formula (6)}$$

Herein, bppOffset1 indicates the first offset; F indicates the buffer fullness of the bitstream buffer; $B_{relative}$ indicates the number of relative lossless coded bits of the coding unit; Sr indicates a parameter related to an image chroma sampling rate; and K9, K10, and K11 are agreed parameters.

When the encoder determines the first offset according to the second rule, the coding unit is a coding unit that does not require subjective quality protection, and the encoder reduces the first offset to reduce a maximum target number of bits that are allowed to be used by the coding unit, so as to improve the quantization parameter of the coding unit. This helps reduce a number of coded bits of a bitstream obtained by encoding the coding unit, reduce storage space required for storing the bitstream, and improve communication efficiency of transmitting the bitstream.

It should be noted that, when input data (namely, the number of lossless coded bits and the buffer fullness) of Formula (5) and Formula (6) is the same, the first offset determined by the encoder according to the first rule is greater than or equal to the first offset determined according to the second rule. Optionally, when $B_{LLMAX}$-$B_{LL}$ of the coding unit is 0 (that is, $B_{LLMAX}=B_{LL}$), a value of $B_{relative}$ is also 0, and Scale in the first rule does not affect a calculation result of bppOffset1. That is, in this case, the first offset determined by the encoder according to the first rule is equal to the first offset determined according to the second rule.

Optionally, the encoder 300 may determine, based on a value of a flag Pro_Flag for the coding unit on which subjective quality protection is performed, whether to perform subjective quality protection.

For example, if Pro_Flag=1, the coding unit requires subjective quality protection, and the encoder determines the first offset according to the foregoing first rule.

For another example, if Pro_Flag=0, the coding unit does not require subjective quality protection, and the encoder determines the first offset according to the foregoing second rule.

Based on the foregoing Scale, larger Scale indicates larger bppOffset1 for the coding unit in which Pro_Flag=1, and stronger subjective protection effect of the coding unit on the clipped target number of bits; and smaller Scale indicates smaller bppOffset1 for the coding unit in which Pro_Flag=1, and weaker subjective protection effect of the coding unit on the clipped target number of bits.

It should be noted that, the values of Pro_Flag are determined based on comparison results obtained by the encoder 300 by comparing the number of relative lossless coded bits of the coding unit with the specified first threshold and comparing the complexity level of the coding unit with the specified second threshold. In some optional implementations, the value of Pro_Flag may not be "0" or "1", and the encoder 300 may set different values for Pro_Flag based on a type of an encoding and decoding system or a supported encoding data format.

In a second possible example, as shown in Example 2 in FIG. 6, the encoder 300 obtains the second offset based on the number of relative lossless coded bits of the coding unit and the number of lossy bits. The second offset is an offset of a second maximum number of coded bits, and may be calculated by using Formula (7).

$$bppOffset2 = MAX(K12 - Bpp, K13) - B_{relative} \quad \text{Formula (7)}$$

Herein, bppOffset2 indicates the second offset; Bpp indicates an input expected number of block bits (the number of lossy bits of the coding unit); $B_{relative}$ indicates the number of relative lossless coded bits of the coding unit; and K12 and K13 are agreed parameters.

In a third possible example, as shown in Example 3 in FIG. 6, the encoder 300 obtains the third offset according to the buffer fullness of the coding unit. The third offset is an offset of a third maximum number of coded bits, and may be calculated by using Formula (8).

$$bppOffset3 = K14 \times (F_{limit} - F) \quad \text{Formula (8)}$$

Herein, bppOffset3 indicates the third offset; F indicates the input buffer fullness; $F_{limit}$ indicates a preset limit value of the buffer fullness; and K14 is an agreed parameter.

The offset for determining the maximum target number of bits of the coding unit is one of the first offset, the second offset, and the third offset.

For example, the offset of the maximum target number of bits of the coding unit is determined in the following manners: After selecting a minimum offset from the first offset and the second offset, the encoder uses a minimum value between the minimum offset and the third offset as the offset of the maximum target number of bits of the coding unit. Optionally, the offset of the maximum target number of bits of the coding unit is determined by using Formula (9).

$$bppOffset = MIN(MIN(bppOffset1, bppOffset2), bppOffset3) \quad \text{Formula (9)}$$

Herein, bppOffset indicates the offset for determining the maximum target number of bits of the coding unit; bppOffset1 indicates the first offset in the first example; bppOffset2 indicates the second offset in the second example; and bppOffset3 indicates the third offset in the third example.

To obtain better encoding performance and reconstruction quality, different target numbers of bits need to be allocated to different coding units in the image via a rate control module (or a rate control unit), to maximize a specified total number of coded bits and achieve optimal quality of a decoded image as much as possible. The decoder may determine the offset of the maximum target number of bits of the coding unit in the different offset obtaining manners, to make full use of the number of coded bits, and improve image quality of the reconstructed image.

In addition, a minimum value is selected from a plurality of offsets of the maximum target number of bits relative to the number of lossy bits, and the target number of bits of the coding unit is clipped based on the maximum target number of bits corresponding to the minimum value. This helps improve accuracy of the target number of bits of the coding unit, improve accuracy of the quantization parameter, and improve subjective quality of a reconstructed image after the decoder decodes the bitstream of the coding unit based on the quantization parameter.

When the encoder obtains the offset for determining the maximum target number of bits of the coding unit, any one or a combination of the foregoing three possible examples may be used.

Still refer to FIG. 5. The image encoding method provided in embodiments further includes steps S540 and S550.

S540: The encoder 300 determines a maximum target number of bits of the coding unit based on the offset, the number of lossy bits, and the minimum number of coded bits.

For example, the encoder 300 may calculate the maximum target number of bits by using Formula (10).

$$B_{MAX}=MAX(Bpp+bppOffset, B_{MIN}) \text{ Formula (10)}$$

Herein, $B_{MAX}$ indicates the maximum target number of bits of the coding unit; Bpp indicates the number of lossy bits (the expected number of block bits) of the coding unit; bppOffset indicates the offset determined by using Formula (9); and $B_{MIN}$ indicates the minimum number of coded bits determined by using Formula (3).

S550: The encoder 300 clips the target number of bits of the coding unit based on the maximum target number of bits and the minimum number of coded bits to obtain a clipped target number of bits.

The clipped target number of bits is used to determine the quantization parameter of the coding unit. A clipping process may be implemented by using Formula (11).

$$B'_{TGT}=MIN(MAX(B_{MIN}, B_{TGT}), B_{MAX}) \text{ Formula (11)}$$

Herein, $B'_{TGT}$ indicates the clipped target number of bits; $B_{TGT}$ indicates the target number of bits before clipping; $B_{MIN}$ indicates the minimum number of coded bits determined by using Formula (3); and $B_{MAX}$ indicates the maximum target number of bits of the coding unit determined by using Formula (10).

For example, if $B_{MIN}>B_{TGT}$ and $B_{MIN}<B_{MAX}$, the clipped target number of bits is $B_{MIN}$.

For another example, if $B_{MIN}>B_{TGT}$ and $B_{MIN}>B_{MAX}$, the clipped target number of bits is $B_{MAX}$.

For another example, if $B_{MIN}<B_{TGT}$ and $B_{TGT}<B_{MAX}$, the clipped target number of bits is $B_{TGT}$.

The clipped target number of bits may be used to determine the quantization parameter of the coding unit. For example, the encoder 300 determines the quantization parameter of the coding unit based on the number of lossless coded bits of the coding unit and the clipped target number of bits.

$$QP=(B_{LL}-(B'_{TGT}+X8)\times X9)\times X10 \text{ Formula (12)}$$

Herein, QP indicates the quantization parameter of the coding unit; $B_{LL}$ indicates the number of lossless coded bits of the coding unit; $B'_{TGT}$ indicates the target number of bits that is determined by using Formula (11) and that is obtained after the coding unit performs clipping; and X8, X9, and X10 are agreed parameters.

In the image encoding method provided in embodiments, the encoder may quantitatively calculate an accurate clipping range of a current coding unit in real time by using formulas, that is, obtain a number of lossless coded bits of the current coding unit by using a complexity level of the current coding unit, and quantitatively calculate the clipping range by using the number of lossless coded bits, a number of lossy coded bits, and a bitstream buffer fullness of the current coding unit.

In addition, the encoder may further set a threshold (for example, the foregoing RcRelativeTh and RcComplexTh) for subjective quality protection that needs to be performed in a bit rate control process. By flexibly setting the threshold and flexibly adjusting the clipping strength, subjective quality of the coding unit is effectively protected.

For example, the clipping strength is determining, by adjusting a threshold, a number of coding units on which subjective quality protection is performed in an encoding process of a plurality of coding units. If the clipping strength is large (the complexity threshold is low), there are a small number of coding units on which subjective quality protection needs to be performed, and a small coverage area of a coding unit on which subjective quality protection is performed in an encoding process. If the clipping strength is small (the complexity threshold is high), there are a large number of coding units on which subjective quality protection needs to be performed, and a large coverage area of a coding unit on which subjective quality protection is performed in an encoding process.

It may be understood that the encoder determines, based on complexity of the current to-be-encoded coding unit relative to that of an entire frame of image, an expected value obtained by encoding the coding unit, that is, obtains the expected value through derivation based on the complexity level of the coding unit and an average complexity level of the entire frame. Therefore, to obtain better encoding performance and quality of a reconstructed image, different expected numbers of bits obtained through encoding are allocated to different coding units in the image via a rate control module (or a rate control unit), to maximize a specified total number of coded bits and achieve optimal quality of a decoded image as much as possible.

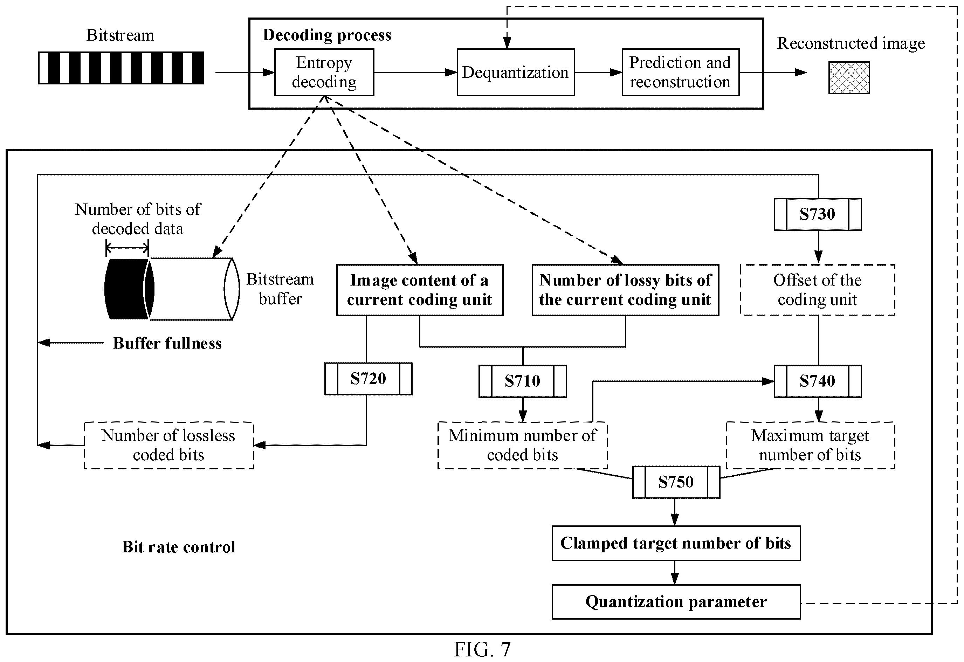

FIG. 7 is a schematic flowchart of bit rate control in a decoding process. A difference between FIG. 7 and FIG. 5 lies in that a quantization parameter output during bit rate control is used in a dequantization process. For a process of determining the quantization parameter, refer to the foregoing explanation in FIG. 5.

It may be understood that, to implement the functions in the foregoing embodiments, the encoder and the decoder each include a corresponding hardware structure and/or software module for performing each function. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

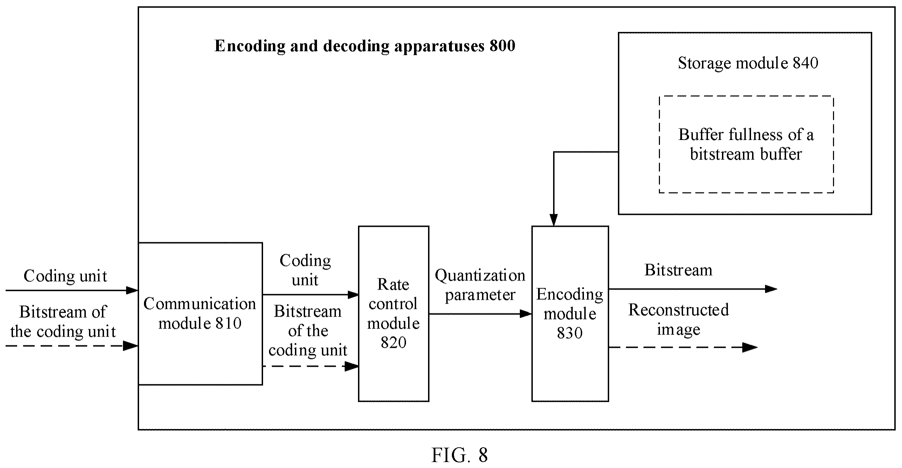

With reference to FIG. 1 to FIG. 7, the foregoing describes in detail the image encoding and decoding methods provided in embodiments, and with reference to FIG. 8, the following describes encoding and decoding apparatuses provided in embodiments.

FIG. 8 is a diagram of a structure of encoding and decoding apparatuses according to this application. These encoding and decoding apparatuses may be configured to implement functions of the encoder and the decoder in the foregoing method embodiments, and therefore can also achieve beneficial effect of the foregoing method embodiments. In this embodiment, the encoding and decoding apparatuses may be the encoder 300 and the decoder 400 shown in FIG. 3A and FIG. 3B, or may be a module (for example, a chip) used in the encoder or the decoder.

As shown in FIG. 8, the encoding and decoding apparatuses 800 include a communication module 810, a rate control module 820, an encoding module 830, and a storage module 840. The encoding and decoding apparatuses 800 are configured to implement functions of the encoding device and the decoding device in the method embodiment shown in FIG. 4A and FIG. 4B or functions of the encoder and the decoder shown in other accompanying drawings.

When the encoding and decoding apparatuses 800 is configured to implement the functions of the encoder, specific functions of the modules are as follows:

The communication module 810 is configured to obtain a to-be-encoded coding unit in a current frame. For example, the communication module 810 is configured to perform S410 in FIG. 4A and FIG. 4B.

The rate control module 820 is configured to: determine a target number of bits of the coding unit based on image content of the coding unit, a number of lossy bits, and a buffer fullness of a bitstream buffer, and determine a quantization parameter based on the target number of bits of the coding unit. For example, the rate control module 820 is configured to perform S420 in FIG. 4A and FIG. 4B.

The encoding module 830 is configured to encode the coding unit based on the quantization parameter, to obtain a bitstream of the coding unit. For example, the encoding module 830 is configured to perform S430 in FIG. 4A and FIG. 4B.

When the encoding and decoding apparatuses 800 are configured to implement the functions of the decoder, specific functions of the modules are as follows:

The communication module 810 is configured to obtain a to-be-decoded bitstream of a coding unit in an image bitstream. For example, the communication module 810 is configured to perform S450 in FIG. 4A and FIG. 4B.

The rate control module 820 is configured to: determine a target number of bits of the coding unit based on image content of the coding unit, a number of lossy bits, and a buffer fullness of a bitstream buffer, and determine a quantization parameter based on the target number of bits of the coding unit. For example, the rate control module 820 is configured to perform S460 in FIG. 4A and FIG. 4B.

The encoding module 830 is configured to decode the bitstream of the coding unit based on the quantization parameter, to obtain a reconstructed image of the coding unit. For example, the encoding module 830 is configured to perform S470 in FIG. 4A and FIG. 4B.

The storage module 840 is configured to store a number of bits of data in the bitstream buffer, so that the rate control module 820 determines the quantization parameter.

It should be understood that the encoding and decoding apparatuses 800 in this embodiment of this application may be implemented through an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the method shown in FIG. 3A and FIG. 3B may be implemented by software, the modules of the encoding and decoding apparatuses 800 may be software modules.

The encoding and decoding apparatuses 800 according to this embodiment of this application may correspondingly perform the methods described in embodiments of this application. In addition, the foregoing and other operations and/or functions of the units in the encoding and decoding apparatuses 800 are respectively used to implement corresponding procedures of the methods in the foregoing accompanying drawings. For brevity, details are not described herein again.

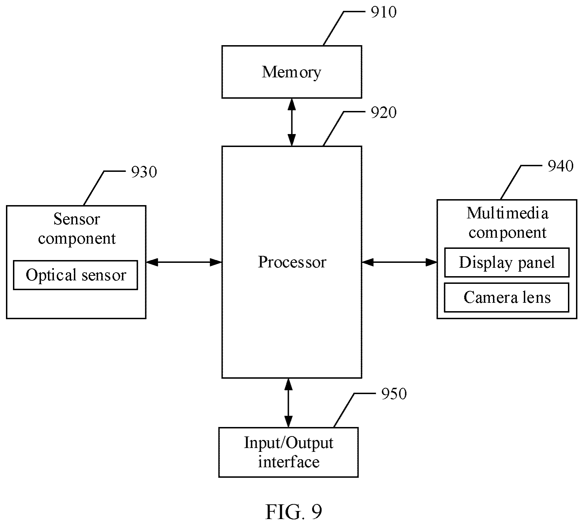

FIG. 9 is a diagram of a structure of an image processing system according to this application. The image processing system is described by using a mobile phone as an example. The mobile phone or a chip system built in the mobile phone includes a memory 910, a processor 920, a sensor component 930, a multimedia component 940, and an input/output interface 950. With reference to FIG. 9, the following describes in detail each component of the mobile phone or the chip system built in the mobile phone.

The memory 910 may be configured to store data, a software program, and a module, and mainly includes a program storage region and a data storage region. The program storage region may store a software program that includes instructions formed by code, including but not limited to an operating system and an application required by at least one function, such as a sound playing function or an image playing function. The data storage region may store data created based on use of the mobile phone, such as audio data, image data, and an address book. In this embodiment of this application, the memory 910 may be configured to store a number of bits of data in a bitstream buffer. In some feasible embodiments, there may be one or more memories. The memory may include a floppy disk, a hard disk like a built-in hard disk and a removable hard disk, a magnetic disk, a compact disc, a magneto-optical disk like a CD_ROM or a DCD_ROM, a nonvolatile storage device like a RAM, a ROM, a PROM, an EPROM, an EEPROM, or a flash memory, or any other form of storage medium well-known in the art.

As a control center of the mobile phone, the processor 920 connects all parts of the entire device through various interfaces and lines, and performs various functions of the mobile phone and processes data by running or executing a software program and/or a software module that are/is stored in the memory 910 and by invoking data stored in the memory 910, to perform overall monitoring on the mobile phone. In this embodiment of this application, the processor 920 may be configured to perform one or more steps in the method embodiments of this application. For example, the processor 920 may be configured to perform one or more steps in S420 to S470 in the foregoing method embodiments. In some feasible embodiments, the processor 920 may be a single-processor structure, a multi-processor structure, a single-thread processor, a multi-thread processor, or the like. In some feasible embodiments, the processor 920 may include at least one of a central processing unit, a general-purpose processor, a digital signal processor, a neural network processor, an image processing unit, an image signal processor, a microcontroller, a microprocessor, or the like. In addition, the processor 920 may further include another hardware circuit or an accelerator, such as an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor 920 may be a combination of processors implementing a computing function, for example, a combination including one or more microprocessors, or a combination of a digital signal processor and a microprocessor.

The sensor component 930 includes one or more sensors, and is configured to provide status evaluation in various aspects for the mobile phone. The sensor component 930 may include an optical sensor, for example, a CMOS or CCD image sensor, for use in an imaging application, that is, become a component of a camera or a camera lens. In this embodiment of this application, the sensor component 930 may be configured to support a camera lens in the multimedia component 940 to obtain an image and the like. In addition, the sensor component 930 may further include an acceleration sensor, a gyroscope sensor, a magnetic sensor, a pressure sensor, or a temperature sensor. The sensor component 930 may detect acceleration/deceleration, an orientation, and an on/off state of the mobile phone, a relative position of the component, or a temperature change of the mobile phone.

The multimedia component 940 provides a screen of an output interface between the mobile phone and a user. The screen may be a touch panel, and when the screen is a touch panel, the screen may be implemented as a touchscreen, to receive an input signal from the user. The touch panel includes one or more touch sensors to sense a touch, sliding, and a gesture on the touch panel. The touch sensor not only can sense a boundary of a touch or sliding action, but also can detect duration and pressure that are associated with the touch or sliding operation. In addition, the multimedia component 940 further includes at least one camera lens. For example, the multimedia component 940 includes a front-facing camera and/or a rear-facing camera. When the mobile phone is in an operating mode, such as a shooting mode or a video mode, the front-facing camera and/or the rear-facing camera may sense an external multimedia signal, and the signal is used to form an image frame. The front-facing camera and the rear-facing camera each may be a fixed optical lens system or have a focal length and an optical zooming capability.

The input/output interface 950 provides an interface between the processor 920 and a peripheral interface module. For example, the peripheral interface module may include a keyboard, a mouse, or a USB (universal serial bus) device. In a possible implementation, the input/output interface 950 may have only one input/output interface, or may have a plurality of input/output interfaces.

Although not shown, the mobile phone may further include an audio component, a communication component, and the like. For example, the audio component includes a microphone, and the communication component includes a wireless fidelity (wireless fidelity, Wi-Fi) module, a Bluetooth module, and the like. Details are not described herein in embodiments of this application.

The foregoing image processing system may be a general-purpose device or a dedicated device. For example, the image processing system may be an edge device (for example, a box carrying a chip having a processing capability). Optionally, the image processing system may alternatively be a server or another device having a computing capability.

It should be understood that the image processing system according to this embodiment may correspond to the encoding and decoding apparatuses 800 in embodiments, and may correspond to a corresponding entity that performs any method according to any one of the foregoing accompanying drawings. In addition, the foregoing and other operations and/or functions of the modules in the encoding and decoding apparatuses 800 are respectively used to implement corresponding procedures of the methods in the foregoing accompanying drawings. For brevity, details are not described herein again.

The method steps in embodiments may be implemented in a hardware manner, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a computing device (for example, the foregoing encoder or decoder). Certainly, the processor and the storage medium may alternatively exist as discrete components in a network device or a terminal device.

This application further provides a chip system. The chip system includes a processor, configured to implement a function of a data processing unit in the foregoing method. In a possible design, the chip system further includes a memory, configured to store program instructions and/or data. The chip system may include a chip, or may include a chip and another discrete component.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by the computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. An image decoding method, wherein the method comprises:

   obtaining a to-be-decoded bitstream of a coding unit in an image bitstream; and
   determining a target number of bits of the coding unit based on image content of the coding unit, a number of lossy bits, and a buffer fullness of a bitstream buffer, and determining a quantization parameter based on the target number of bits of the coding unit, wherein the quantization parameter is used to decode the bitstream of the coding unit; and
   the image content indicates complexity of different pixel regions in the coding unit, the number of lossy bits indicates: an expected number of bits obtained by performing lossy coding on the coding unit when the image content is not referred to, the bitstream buffer is used to store a number of coded bits obtained by decoding one or more coding units, and the target number of bits of the coding unit indicates: an expected number of bits obtained by performing lossy coding on the coding unit when the image content of the coding unit is referred to.

2. The method according to claim 1, wherein the determining the target number of bits of the coding unit based on the image content of the coding unit, the number of lossy bits, and the buffer fullness of the bitstream buffer comprises:

determining a minimum number of coded bits of the coding unit based on the number of lossy bits and the buffer fullness;

determining a number of lossless coded bits of the coding unit based on the image content of the coding unit, wherein the number of lossless coded bits indicates an expected number of bits obtained by performing lossless coding on the coding unit;

determining an offset of the coding unit based on the image content of the coding unit, the buffer fullness, and the number of lossless coded bits, wherein the offset indicates a difference between a maximum number of coded bits obtained by performing lossy coding on the coding unit and the number of lossy bits;

determining a maximum target number of bits of the coding unit based on the offset, the number of lossy bits, and the minimum number of coded bits; and

clipping the target number of bits of the coding unit based on the maximum target number of bits and the minimum number of coded bits to obtain a clipped target number of bits, wherein the clipped target number of bits is used to determine the quantization parameter of the coding unit.

3. The method according to claim 2, wherein the determining the offset of the coding unit based on the image content of the coding unit, the buffer fullness, and the number of lossless coded bits comprises:

determining a complexity level of the coding unit based on the image content of the coding unit, and determining a number of relative lossless coded bits of the coding unit based on a maximum number of relative lossless coded bits of the coding unit, a maximum number of lossless coded bits of the coding unit, and the number of lossless coded bits, wherein the maximum number of relative lossless coded bits indicates: a maximum value of the number of relative lossless coded bits of the coding unit at a pixel bit depth of a current frame; and

obtaining a first offset based on the number of relative lossless coded bits of the coding unit, the complexity level, the number of lossless coded bits, and the buffer fullness; and/or

obtaining a second offset based on the number of relative lossless coded bits of the coding unit and the number of lossy bits; and/or

obtaining a third offset based on the buffer fullness of the coding unit, wherein

the offset for determining the maximum target number of bits of the coding unit is one of the first offset, the second offset, and the third offset.

4. The method according to claim 3, wherein the offset of the maximum target number of bits of the coding unit is determined in the following manners:

selecting a minimum offset from the first offset and the second offset; and

using a minimum value between the minimum offset and the third offset as the offset of the maximum target number of bits of the coding unit.

5. The method according to claim 3 or 4, wherein the obtaining the first offset based on the number of relative lossless coded bits of the coding unit, the complexity level, the number of lossless coded bits, and the buffer fullness comprises:

determining whether the number of relative lossless coded bits of the coding unit is greater than or equal to a specified first threshold and whether the complexity level of the coding unit is less than or equal to a specified second threshold; and

if yes, processing the number of lossless coded bits and the buffer fullness according to a first rule to obtain the first offset; or

if no, processing the number of lossless coded bits and the buffer fullness according to a second rule to obtain the first offset, wherein the first offset determined according to the first rule is greater than or equal to the first offset determined according to the second rule.

6. The method according to any one of claims 2 to 5, wherein
the determining the quantization parameter based on the target number of bits of the coding unit comprises:
determining the quantization parameter of the coding unit based on the number of lossless coded bits of the coding unit and the clipped target number of bits.

7. The method according to any one of claims 1 to 6, wherein the image content comprises the complexity level of the coding unit.

8. The method according to claim 7, wherein the complexity level of the coding unit comprises at least one of a luminance complexity level and a chrominance complexity level.

9. The method according to any one of claims 1 to 8, wherein the method further comprises:
decoding the bitstream of the coding unit based on the quantization parameter, to obtain a reconstructed image of the coding unit.

10. An image encoding method, wherein the method comprises:

obtaining a to-be-encoded coding unit in a current frame; and
determining a target number of bits of the coding unit based on image content of the coding unit, a number of lossy bits, and a buffer fullness of a bitstream buffer, and determining a quantization parameter based on the target number of bits of the coding unit, wherein the quantization parameter is used to encode the coding unit; and the image content indicates complexity of different pixel regions in the coding unit, the number of lossy bits indicates: an expected number of bits obtained by performing lossy coding on the coding unit when the image content is not referred to, the bitstream buffer is used to store a number of coded bits obtained by encoding one or more coding units, and the target number of bits of the coding unit indicates: an expected number of bits obtained by performing lossy coding on the coding unit when the image content of the coding unit is referred to.

11. The method according to claim 10, wherein the determining the target number of bits of the coding unit based on the image content of the coding unit, the number of lossy bits, and the buffer fullness of the bitstream buffer comprises:

determining a minimum number of coded bits of the coding unit based on the number of lossy bits and the buffer fullness;
determining a number of lossless coded bits of the coding unit based on the image content of the coding unit, wherein the number of lossless coded bits indicates an expected number of bits obtained by performing lossless coding on the coding unit;
determining an offset of the coding unit based on the image content of the coding unit, the buffer fullness, and the number of lossless coded bits, wherein the offset indicates a difference between a maximum number of coded bits obtained by performing lossy coding on the coding unit and the number of lossy bits;
determining a maximum target number of bits of the coding unit based on the offset, the number of lossy bits, and the minimum number of coded bits; and
clipping the target number of bits of the coding unit based on the maximum target number of bits and the minimum number of coded bits to obtain a clipped target number of bits, wherein the clipped target number of bits is used to determine the quantization parameter of the coding unit.

12. The method according to claim 11, wherein the determining the offset of the coding unit based on the image content of the coding unit, the buffer fullness, and the number of lossless coded bits comprises:

determining a complexity level of the coding unit based on the image content of the coding unit, and determining a number of relative lossless coded bits of the coding unit based on a maximum number of relative lossless coded bits of the coding unit, a maximum number of lossless coded bits of the coding unit, and the number of lossless coded bits, wherein the maximum number of relative lossless coded bits indicates: a maximum value of the number of relative lossless coded bits of the coding unit at a pixel bit depth of a current frame; and
obtaining a first offset based on the number of relative lossless coded bits of the coding unit, the complexity level, the number of lossless coded bits, and the buffer fullness; and/or
obtaining a second offset based on the number of relative lossless coded bits of the coding unit and the number of lossy bits; and/or
obtaining a third offset based on the buffer fullness of the coding unit, wherein
the offset for determining the maximum target number of bits of the coding unit is one of the first offset, the second offset, and the third offset.

13. The method according to claim 12, wherein the offset of the maximum target number of bits of the coding unit is determined in the following manners:

selecting a minimum offset from the first offset and the second offset; and
using a minimum value between the minimum offset and the third offset as the offset of the maximum target number of bits of the coding unit.

14. The method according to claim 12 or 13, wherein the obtaining the first offset based on the number of relative lossless coded bits of the coding unit, the complexity level, the number of lossless coded bits, and the buffer fullness comprises:

   determining whether the number of relative lossless coded bits of the coding unit is greater than or equal to a specified first threshold and whether the complexity level of the coding unit is less than or equal to a specified second threshold; and
   if yes, processing the number of lossless coded bits and the buffer fullness according to a first rule to obtain the first offset; or
   if no, processing the number of lossless coded bits and the buffer fullness according to a second rule to obtain the first offset, wherein the first offset determined according to the first rule is greater than or equal to the first offset determined according to the second rule.

15. The method according to any one of claims 11 to 14, wherein
   the determining the quantization parameter based on the target number of bits of the coding unit comprises:
   determining the quantization parameter of the coding unit based on the number of lossless coded bits of the coding unit and the clipped target number of bits.

16. The method according to any one of claims 10 to 15, wherein the image content comprises the complexity level of the coding unit.

17. The method according to claim 16, wherein the complexity level of the coding unit comprises at least one of a luminance complexity level and a chrominance complexity level.

18. The method according to any one of claims 10 to 17, wherein the method further comprises:
   encoding the coding unit based on the quantization parameter, to obtain a bitstream of the coding unit.

19. Encoding and decoding apparatuses, wherein the encoding and decoding apparatuses are configured to perform the method according to any one of claims 1 to 18.

20. A decoder, wherein the decoder comprises at least one processor and a memory, and the memory is configured to store a computer program, so that when the computer program is executed by the at least one processor, the method according to any one of claims 1 to 9 is implemented.

21. An encoder, wherein the encoder comprises at least one processor and a memory, and the memory is configured to store a computer program, so that when the computer program is executed by the at least one processor, the method according to any one of claims 10 to 18 is implemented.

22. An encoding and decoding system, wherein the encoding and decoding system comprises the encoder according to claim 21 and the decoder according to claim 20, the encoder is configured to perform operation steps of the method according to any one of claims 10 to 18, and the decoder is configured to perform the method according to any one of claims 1 to 9.

23. A computer-readable storage medium, comprising computer software instructions, wherein when the computer software instructions are run on a computer, the computer performs the method according to any one of claims 1 to 9, or the computer performs the method according to any one of claims 10 to 18.

24. A computer program product, wherein when the computer program product runs on a computer, the computer performs the method according to any one of claims 1 to 9, or the computer performs the method according to any one of claims 10 to 18.

FIG. 1

**Video encoding and decoding system 200**

Raw image

Preprocessed image

Bitstream

| Encoding device 210 |
| --- |
| Data source 211 |
| Preprocessing module 212 |
| Encoder 213<br><br>Rate control unit 2131 \| Encoding unit 2132 |
| Communication interface 214 |

Communication channel 230

Bitstream

| Decoding device 220 |
| --- |
| Display device 221 |
| Post-processing module 222 |
| Decoder 223<br><br>Rate control unit 2231 \| Encoding unit 2232 |
| Communication interface 224 |

To-be-displayed reconstructed image

Reconstructed image

Bitstream

FIG. 2

EP 4 668 742 A1

**Encoder 300**

**Rate control unit 320**

Image content of the coding unit

Number of lossy bits of the coding unit

Buffer fullness of a bitstream buffer

Number of coded bits of a previous coding unit

Image content of the coding unit

Encoding unit 340

Quantization parameter

Quantization unit 330

Quantized residual

Residual

Prediction unit 310

Coding unit

Block division unit 350

Bitstream

Raw image

TO FIG. 3B

FIG. 3A

**Decoder 400**

**Rate control unit 420**

Number of decoded
bits of the previous
coding unit

Image
content of
the coding
unit

Number of
lossy bits of
the coding
unit

Buffer fullness
of the bitstream
buffer

Image content of
the coding unit

Quantization
parameter

Decoding unit
410

Quantized residual

Dequantization
unit 430

Residual

Prediction and
reconstruction
unit 440

Reconstructed
image

Display the
reconstructed
image

FIG. 3B

EP 4 668 742 A1

FIG. 4A

EP 4 668 742 A1

**Decoding device 220**

S450

Bitstream

Video

Decode

Image content
of the current
coding unit

Number of bits
of decoded data

**Number of lossy
bits of the current
coding unit**

Bitstream
buffer

Form

Buffer fullness

A plurality of
frames of
reconstructed
images

Reconstructed
image of the
current frame

Reconstructed
image

S470

S460

**Target number
of bits**

**Quantization
parameter**

FIG. 4B

| Coding unit | **Encoding process** | | | Bitstream |

Encoding process: Prediction → Quantization → Entropy encoding

**Bit rate control**

- Number of bits of encoded data
- Bitstream buffer
- **Buffer fullness**
- **Image content of the current coding unit**
- **Number of lossy bits of the current coding unit**
- Offset of the coding unit

S530

S520

S510

S540

- Number of lossless coded bits
- Minimum number of coded bits
- Maximum target number of bits

S550

**Clamped target number of bits**

**Quantization parameter**

FIG. 5

**Determine a maximum target number of bits**

**Determine a minimum target number of bits**

Number of lossy bits Buffer fullness

Calculate a minimum number of coded bits

Calculate a minimum target number of bits

---- Example 1 ----

**First case**

$B_{relative} > RcRelativeTh$ and $K \leq RcComplexTh$

**Second case**

$B_{relative} \leq RcRelativeTh$ or $K > RcComplexTh$

Input data

Number of lossless coded bits and buffer fullness

Number of lossless coded bits and number of lossy bits

Buffer fullness

Example 2

Example 3

**First offset**

Second offset

Third offset

Maximum target number of bits

**Clamp a target number of bits**

Clamped target number of bits

Quantization parameter

FIG. 6

FIG. 7

EP 4 668 742 A1

**Encoding and decoding apparatuses 800**

Storage module 840

Buffer fullness of a
bitstream buffer

Coding unit →

Bitstream of
the coding unit ⇢

Communication
module 810

Coding
unit →

Bitstream
of the
coding unit ⇢

Rate
control
module
820

Quantization
parameter →

Encoding
module
830

Bitstream →

Reconstructed
image ⇢

FIG. 8

FIG. 9

## INTERNATIONAL SEARCH REPORT

| International application No. |
|---|
| **PCT/CN2024/080296** |

### A. CLASSIFICATION OF SUBJECT MATTER

H04N19/124(2014.01)i; H04N19/184(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

WPABS, CNTXT, ENTXTC, ENTXT, VEN, IEEE, CNKI, JVET: 比特数, 码率, 量化, 量化参数, 参考, 复杂, 缓冲, 未参考, 有损, 无损, 满度, 充盈度, 编码, 阈值, 调整, bit, code rate, quantization, quantization parameters, reference, complex, buffer, unreferenced, reference, lossy, lossless, fullness, filling, encoding, threshold, adjustment

### C. DOCUMENTS CONSIDERED TO BE RELEVANT

| Category* | Citation of document, with indication, where appropriate, of the relevant passages | Relevant to claim No. |
|---|---|---|
| A | WO 2021244341 A1 (ZTE CORP.) 09 December 2021 (2021-12-09) entire document | 1-24 |
| A | WO 2022012183 A1 (GUANGDONG OPPO MOBILE TELECOMMUNICATIONS CORP., LTD.) 20 January 2022 (2022-01-20) entire document | 1-24 |
| A | KR 20100129091 A (SNU R&DB FOUNDATION et al.) 08 December 2010 (2010-12-08) entire document | 1-24 |
| A | US 2005175093 A1 (APPLE INC.) 11 August 2005 (2005-08-11) entire document | 1-24 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 May 2024** | **31 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080296**

| Patent document cited in search report | | | Publication date (day/month/year) | Patent family member(s) | | | Publication date (day/month/year) |
|---|---|---|---|---|---|---|---|
| WO | 2021244341 | A1 | 09 December 2021 | None | | | |
| WO | 2022012183 | A1 | 20 January 2022 | None | | | |
| KR | 20100129091 | A | 08 December 2010 | KR | 101069254 | B1 | 04 October 2011 |
| US | 2005175093 | A1 | 11 August 2005 | US | 7453938 | B2 | 18 November 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310301666X